# FASCICULE DE BREVET EUROPEEN

(11) **EP 3 682 600 B1**
(45) Date de publication et mention de la délivrance du brevet: **08.09.2021**
(21) Numéro de dépôt: 18782775.3
(22) Date de dépôt: 12.10.2018
(51) Int. Cl.: H04L 12/28, H04L 12/54

(54) **GESTION DE LA CONNEXION AVEC D'AUTRES PASSERELLES RESIDENTIELLES D'UNE PASSERELLE RESIDENTIELLE METTANT EN OEUVRE L'AGREGATION DE LIENS**
VERWALTUNG DER VERBINDUNG MIT ANDEREN RESIDENTIAL GATEWAYS EINES RESIDENTIAL GATEWAYS MIT VERBINDUNGSAGGREGATION
MANAGEMENT OF CONNECTION WITH OTHER RESIDENTIAL GATEWAYS OF A RESIDENTIAL GATEWAY IMPLEMENTING LINK AGGREGATION

(30) Priorité: 17.10.2017 FR 1759746
(43) Date de publication de la demande: 22.07.2020
(73) Titulaire: Sagemcom Broadband SAS, 92500 Rueil-Malmaison (FR)
(72) Inventeur: BATARDIÈRE, Simon, 92500 Rueil Malmaison (FR)
(74) Mandataire: Cabinet Camus Lebkiri
(86) Numéro de dépôt international: PCT/EP2018/077924
(87) Numéro de publication internationale: WO 2019/076765

(56) Documents cités:
- WO-A1-2007/116411
- US-A1- 2011 066 875
- US-A1- 2017 063 668
- US-A1- 2017 230 280

## Description

### Domaine Technique

La présente invention se rapporte de manière générale à la gestion des connexions dans une passerelle résidentielle mettant en œuvre l'agrégation de liens, pour l'établissement d'une unique connexion multi-chemins entre deux équipements informatiques ou équipements de réseau informatique.

Elle concerne plus particulièrement un procédé de routage de données, et un dispositif et un produit programme d'ordinateur associé, pour utilisation dans une passerelle résidentielle en mettant en œuvre l'agrégation de liens.

L'invention trouve des applications, en particulier, dans les passerelles résidentielles qui relient les réseaux informatiques domestiques à Internet.

### Arrière-plan Technologique

L'agrégation de liens (aussi appelée « *Bonding* ») est une technique utilisée dans les réseaux informatiques comme les réseaux Ethernet, pour le routage de paquets IPv4 (« *Internet Protocol version 4* ») ou IPv6 (« *Internet Protocol version 6* »)*,* par exemple. Elle peut être définie comme l'agrégation de plusieurs interfaces réseaux en une interface logique de sorte à augmenter la bande passante et apporter de la redondance pour une connexion entre deux équipements déterminés. Par exemple, elle peut être utilisée pour augmenter le débit d'une connexion TCP (« Transmission Control Protocol ») dans un réseau étendu ou WAN (« *Wide Area Network »,* par opposition au réseau local ou LAN).

Dans les réseaux IP (« *Internet Protocol*»)*,* elle est le plus souvent mise en place entre les ports de commutateurs Ethernet dans le réseau Internet, ou entre des cartes Ethernet d'ordinateurs sous Linux, Unix ou Windows. Dans ce contexte, elle permet le regroupement de plusieurs ports réseau et de les utiliser comme s'il s'agissait d'un seul. Elle répond à deux problèmes dans les réseaux, à savoir la limitation en bande passante entre deux équipements, d'une part, et l'absence de redondance des liens, d'autre part. L'agrégation de liens permet en effet d'accroître le débit au-delà des limites d'un seul lien, et éventuellement de faire en sorte que les autres ports prennent le relais si un lien tombe en panne. Toutefois, l'agrégation est un concept général qui peut être mis en œuvre dans chacune des trois couches inférieures du modèle OSI (de l'anglais « *Open Systems Interconnection »).*

Dans le contexte de la présente invention, l'agrégation de différents liens permet d'augmenter le débit d'une « passerelle résidentielle » en utilisant simultanément les capacités d'une pluralité de liens DSL (« *Digital Subscriber Line* »), respectivement associés à une pluralité de passerelles résidentielles et via lesquels chaque passerelle résidentielle peut communiquer avec l'Internet. L'agrégation utilise d'autres liens établis entre les passerelles résidentielles. Typiquement, les liens DSL et Ethernet vers le WAN (typiquement vers l'Internet) sont établis à travers une interface DSL et à travers une interface Ethernet, respectivement, de la passerelle résidentielle, alors qu'un lien vers le WAN à travers une autre passerelle résidentielle est établi par exemple par une interface Wi-Fi (normes IEEE 802.11 ou ISO/CEI 8802-11), bien que ces exemples ne soient pas exclusifs. Par exemple, un lien optique peut aussi être utilisé par la passerelle résidentielle pour sa liaison avec le WAN.

Par « passerelle résidentielle » ou CPE (de l'anglais « *Customer-Premises Equipment*»), on entend un équipement matériel terminal qui se trouve dans le site d'un client (particulier ou entreprise), et qui est raccordé d'une part à une boucle locale LAN et d'autre part à l'infrastructure d'un fournisseur d'accès à Internet (FAI) dans un point de présence ou POP (de l'anglais « *Point Of Présence* »). C'est l'équipement terminal du côté du client, qui est utilisé pour se connecter au réseau Internet. Cet équipement est aussi communément appelé une « box ».

### Art Antérieur

L'agrégation de différents liens est en soi une technique déjà connue et déployée. De nombreuses technologies permettent de la mettre en œuvre, comme par exemple l'ensemble d'extensions de la spécification TCP connu sous l'appellation « Multipath TCP » ou MPTCP, ou bien l'encapsulation générique de routage ou GRE (« Generic Routing Encapsulation »). L'idée de base derrière l'agrégation de lien telle qu'elle est mise en œuvre, par exemple, dans le protocole MPTCP défini dans la RFC 6824 de l'IETF, est d'établir un lien entre un hôte source et un hôte destination et non plus entre deux interfaces comme c'est le cas dans le protocole de contrôle de transmission (TCP) standard.

Le MPTCP est un effort continu du groupe de travail de l'IETF *« Internet Engineering Task Force* ») qui vise à permettre à TCP d'utiliser plusieurs chemins d'accès afin de maximiser l'utilisation des ressources et l'augmentation de la redondance tout en restant compatible avec les équipements actuels (firewall, NAT, ...) de l'Internet. Un client peut s'appuyer sur ce protocole pour se connecter à un même hôte de destination via plusieurs connexions sur des adaptateurs réseau différents, créant ainsi des connexions de données fiables et efficaces entre l'hôte source et l'hôte de destination qui interagissent avec les infrastructures réseau existantes. MPTCP permet ainsi d'établir et d'utiliser une même et unique connexion TCP au travers de plusieurs interfaces réseau. Le cas typique d'utilisation consiste à décharger les réseaux 4G (ou LTE, de l'anglais « *Long Term Evolution* », à savoir la norme mondiale de services sans fil de quatrième génération) via le Wi-Fi, ce qui permet d'utiliser une borne ou point d'accès Wi-Fi public (« *hot spot* ») lorsque le terminal est à portée radio de cette borne, et de repasser de façon transparente exclusivement sur le réseau 4G dès que le terminal n'est plus à portée. Une autre application est le partage de plusieurs liens (par exemple, deux câbles Ethernet) pour un serveur de manière transparente.

L'intérêt de MPTCP est en effet d'être totalement transparent pour les applications. Contrairement à la liaison de canaux Ethernet utilisant l'agrégation de liens selon le protocole IEEE 802.3ad LACP (« *Link Aggregation Control Protocol* »), par exemple, Multipath TCP peut équilibrer une seule et unique connexion TCP à travers de multiples interfaces. Il suffit d'une implémentation à la fois du côté client et du côté serveur pour que ce soit possible. En janvier 2013, l'IETF a publié les spécifications de Multipath TCP comme une norme expérimentale dans la RFC 6824.

GRE est quant à lui un protocole de mise en tunnel qui permet d'encapsuler n'importe quel paquet de la couche réseau. Le paquet d'origine est l'information utile (« *payload* ») du paquet final. Par exemple, les serveurs qui souhaitent mettre en place des tunnels peuvent utiliser GRE à travers Internet pour créer des réseaux privés virtuels. Le protocole GRE correspond au code 47 dans le champ « protocoi » dans un entête d'un paquet de données IPv4, ou le champ « next header » du dernier entête d'un paquet de données IPv6.

Toutes ces technologies demandent d'avoir un point d'agrégation déployé dans le cœur de réseau, afin de reconstituer dans le réseau le flux de données à partir des sous-flux respectivement reçus par chacun des liens agrégés.

Toutefois, les implémentations connues de ces technologies sont essentiellement limitées à une agrégation de multiples liens WAN d'une passerelle résidentielle. De ce fait, elles ne prennent pas en considération les problèmes qui peuvent être soulevés par la mise en œuvre des liens WAN de différentes passerelles résidentielles respectives, qui sont accessibles les unes par les autres au travers de liens permettant à plusieurs passerelles de communiquer entre elles. De tels liens sont par exemple offerts dans les topologies de réseaux maillés (filaires ou non) de type MESH. Il peut aussi s'agir de liens sans fil, offerts dans du Wi-Fi communautaire.

Les problèmes susmentionnés comprennent notamment les problèmes des croisements de flux de données, qui sont préjudiciables à l'efficacité du système. En effet il y a une augmentation de la latence et de la complexité si deux passerelles effectuent mutuellement cette opération d'agrégation l'une vers l'autre et *vice versa.* Par exemple, si une première passerelle envoie une partie de son trafic vers une seconde passerelle afin d'augmenter son débit, et que, ladite seconde passerelle fait la même chose en envoyant une partie de son trafic vers la première passerelle, alors ni le trafic global, ni le trafic pour chacune des passerelles n'est augmenté. Effectuer une agrégation de liens dans ces circonstances est donc inefficace et ne présente que des inconvénients.

Par ailleurs, il existe différents protocoles de routage qui permettent de déterminer le chemin optimal vers un hôte de destination donné. On peut citer par exemple le protocole OLSR (« *Optimized Link State Routing protocol* »), selon la RFC 36263 de l'IETF (« *Internet Engineering Task Force* »), le protocole RIP (« *Routing Information Protocol* ») qui permet aux routeurs qui interconnectent des réseaux via IP (« Internet Protocol ») de partager des informations relatives à l'acheminement du trafic entre ces différents réseaux. Cependant, ces protocoles de routage sont adaptés pour trouver le lien optimal, alors que les techniques d'agrégations sont adaptés pour chercher à utiliser tous les liens possibles. Il s'ensuit que ces protocoles n'apportent aucune solution pour résoudre les problèmes de croisements de flux de données précités.

La demande de brevet publiée sous le numéro de publication US2011066875 divulgue comment des passerelles d'utilisateurs distincts peuvent être mises en communication les unes avec les autres et peuvent faciliter les communications entre le fournisseur de services et une ou plusieurs passerelles qui connaissent des problèmes ou d'autres conditions indésirables, de manière à prévenir l'apparition de difficultés de service lorsque les passerelles ne fonctionnent pas correctement.

### Résumé de l'Invention

L'invention permet de résoudre un problème posé par l'agrégation de lien ou « bonding », qui est le risque de création d'un croisement de flux entre deux passerelles résidentielles (CPE) qui mettent en œuvre cette technologie.

L'invention vise à supprimer, ou du moins atténuer, tout ou partie des inconvénients de l'art antérieur précités en évitant la création de flux croisés qui affectent l'intérêt de faire de l'agrégation de liens entre plusieurs passerelles résidentielles, par exemple.

A cet effet, un premier aspect de l'invention propose un procédé de gestion de la connexion d'un premier équipement de réseau avec au moins un second équipement de réseau d'un réseau de données, chacun desdits premier et second équipements de réseau comprenant un moteur d'agrégation de liens mettant en œuvre une technique d'agrégation de liens pour sélectionner l'un parmi au moins un premier et un second liens de sortie participant à l'agrégation de lien dans ledit équipement de réseau avec :
- un lien de sortie pour relier ledit équipement de réseau à l'autre équipement de réseau; et
- au moins un autre lien de sortie qui est capable d'atteindre un point d'agrégation déterminé dans le réseau de données sans passer par l'autre équipement de réseau,
le procédé comprenant les étapes suivantes, mises en œuvre dans le premier équipement de réseau:
i. décision par le moteur d'agrégation du premier équipement de réseau d'envoyer des données sur le lien de sortie dudit premier équipement de réseau qui le relie au second équipement de réseau ;
ii. détection de si des données du second équipement de réseau ou d'un autre équipement de réseau sont reçues, via le lien de sortie dudit second équipement de réseau et/ou de l'autre équipement de réseau qui le relie au premier équipement de réseau, dans le cadre d'une agrégation de liens mise en œuvre dans ledit second équipement de réseau et/ou dans l'autre équipement de réseau, sur la base de marqueurs présents dans lesdites données ; puis,
iii. dans l'affirmative, fermeture du lien de sortie du second équipement de réseau et/ou de l'autre équipement de réseau qui le relie au premier équipement de réseau ; et,
iv. transmission des données sur le lien de sortie reliant le premier équipement de réseau au second équipement de réseau dans le cadre de l'agrégation de liens mise en œuvre dans le premier équipement de réseau.

En bref, le procédé empêche qu'il soit offert aux autres équipements de pouvoir faire de l'agrégation via l'équipement qui implémente le procédé si cet équipement fait lui-même de l'agrégation avec d'autres équipements afin d'augmenter sa bande passante. On évite ainsi les croisements de flux à l'origine des inconvénients précédemment exposés.

Dans un mode de mise en œuvre, le procédé peut comprendre en outre la détermination par le premier équipement de réseau, lorsque tout nouvel équipement de réseau tente de se connecter audit premier équipement de réseau, de si des données peuvent être reçues dudit nouvel équipement de réseau en application d'une agrégation de lien mise en œuvre dans ledit nouvel équipement de réseau, sur la base d'un ou plusieurs marqueurs dans des données reçues dudit nouvel équipement dans le cadre de la procédure d'établissement de la connexion dudit nouvel équipement de réseau au premier équipement de réseau, ou sur la base d'un ou plusieurs marqueurs dans des données reçues dudit nouvel équipement de réseau une fois ladite connexion établie.

Par exemple, si le nouvel équipement de réseau tente de se connecter au premier équipement de réseau alors que ledit premier équipement de réseau met en œuvre de l'agrégation de liens, et s'il est déterminé que des données peuvent être reçues dudit nouvel équipement de réseau en application d'une agrégation de lien mise en œuvre dans ledit nouvel équipement, alors la connexion du nouvel équipement de réseau au premier équipement de réseau peut être refusée ou être fermée dans le cas où ladite connexion est déjà établie au moment où la détermination précitée intervient.

Dans un mode de mise en œuvre, dans lequel le second équipement de réseau et/ou l'autre équipement de réseau et/ou le nouvel équipement réseau utilisent le protocole MPTCP pour l'agrégation de liens, un marqueur utilisé peut être la présence de l'option TCP 30 « *muitipath TCP* » dans les données reçues par le premier équipement de réseau, en provenance du second équipement de réseau ou de l'autre équipement de réseau ou du nouvel équipement de réseau, respectivement.

Dans un autre mode de mise en œuvre, dans lequel le second équipement de réseau et/ou l'autre équipement de réseau et/ou le nouvel équipement réseau utilisent des tunnels GRE pour l'agrégation de liens, un marqueur utilisé peut être la valeur 47 dans le champ « protocol » dans un entête d'un paquet de données IPv4, ou le champ « next header » du dernier entête d'un paquet de données IPv6, compris dans les données reçues par le premier équipement de réseau, en provenance du second équipement de réseau ou de l'autre équipement de réseau ou du nouvel équipement de réseau, respectivement.

Dans l'un et/ou l'autre des deux modes de mise en œuvre ci-dessus, on peut en outre tester la nature de l'interface par laquelle sont reçues, par le premier équipement de réseau, les données reçues du second équipement réseau et/ou de l'autre équipement de réseau et/ou du nouvel équipement de réseau. Ceci permet de lever des limitations liées au fait que MPTCP ou GRE, respectivement, puisse avoir été utilisé dans le second équipement de réseau ou dans le nouvel équipement de réseau dans un autre contexte que l'agrégation de liens.

Dans d'autres mises en œuvre, un marqueur utilisé peut comprendre l'adresse IP de destination d'un paquet de données compris dans les données reçues du second équipement de réseau ou de l'autre équipement de réseau ou du nouvel équipement de réseau avec les adresses IP contenues dans une liste d'adresses IP du point d'agrégation et connues du premier équipement de réseau.

En variante ou en complément, un marqueur utilisé peut comprendre un identifiant unique, connu par le premier équipement de réseau, du second équipement de réseau et/ou de l'autre équipement de réseau et/ou du nouvel équipement de réseau.

Dans un tel cas, l'identifiant unique du second équipement de réseau ou de l'autre équipement de réseau ou du nouvel équipement de réseau peut comprendre une adresse physique dans le réseau qui est propre audit second équipement de réseau ou à l'autre équipement de réseau ou au nouvel équipement de réseau, respectivement, et qui est connue du premier équipement de réseau soit de manière statique soit de manière dynamique parce qu'elle est communiquée audit premier équipement de réseau par un protocole de gestion du réseau. Dans ce cas, le test de l'identifiant comprend la comparaison avec un intervalle d'adresses physiques connues du premier équipement de réseau.

Lorsque les données sont reçues du second équipement de réseau ou du nouvel équipement de réseau via une interface Wi-Fi IEEE 802.11 du premier équipement de réseau, un marqueur utilisé peut comprendre une valeur spécifique dans l'attribut numéro 26 d'une trame de type probe request.

Enfin, dans un mode de mise en œuvre dans lequel le premier équipement de réseau (CPE1) joue le rôle de serveur DHCP vis-à-vis du second équipement de réseau (CPE2) et/ou vis-à-vis de l'autre équipement de réseau et/ou vis-à-vis du nouvel équipement de réseau, un marqueur utilisé peut être une option DHCP avec une valeur prédéfinie connue du premier équipement de réseau, du second équipement de réseau et/ou de l'autre équipement de réseau et/ou du nouvel équipement de réseau, qui est insérée par le second équipement de réseau ou par l'autre équipement de réseau ou par le nouvel équipement de réseau, respectivement, dans les données reçues par le premier équipement de réseau dudit second équipement de réseau ou dudit autre équipement de réseau ou dudit nouvel équipement de réseau, respectivement, lorsque ces données font l'objet d'une agrégation de liens dans ledit second équipement de réseau ou dans ledit autre équipement de réseau ou dans ledit nouvel équipement de réseau, respectivement.

Dans un second aspect, l'invention concerne un dispositif de gestion de la connexion d'un premier équipement de réseau avec au moins un second équipement de réseau, chacun desdits premier et second équipements de réseau comprenant un moteur d'agrégation de liens mettant en œuvre une technique d'agrégation de liens pour sélectionner l'un parmi au moins un premier et un second liens de sortie participant à l'agrégation de lien dans ledit équipement de réseau avec :
- un lien de sortie pour relier ledit équipement de réseau à l'autre équipement de réseau; et
- au moins un autre lien de sortie qui est capable d'atteindre un point d'agrégation dans le réseau sans passer par l'autre équipement de réseau,
le dispositif comprenant, au sein du premier équipement de réseau :
i. des moyens dans le moteur d'agrégation pour décider d'envoyer des données sur le lien de sortie dudit premier équipement de réseau qui le relie au second équipement de réseau ;
ii. des moyens pour détecter si des données du second équipement ou d'un autre équipement de réseau sont reçues, via le lien de sortie dudit second équipement de réseau et/ou de l'autre équipement de réseau qui le relie au premier équipement de réseau, dans le cadre d'une agrégation de liens mise en œuvre dans ledit second équipement de réseau et/ou dans ledit autre équipement de réseau, sur la base de marqueurs présents dans lesdites données ; puis,
iii. des moyens pour, dans l'affirmative, fermer le lien de sortie du second équipement de réseau et/ou de l'autre équipement de réseau qui le relie au premier équipement de réseau ; et,
iv. des moyens pour transmettre des données sur le lien de sortie reliant le premier équipement de réseau au second équipement de réseau dans le cadre de l'agrégation de liens mise en œuvre dans le premier équipement de réseau.

Dans un troisième aspect, l'invention a également pour objet une passerelle résidentielle comprenant un dispositif selon le deuxième aspect.

Dans un quatrième aspect, l'invention a encore pour objet un produit "programme d'ordinateur" chargeable directement dans la mémoire interne d'un ordinateur numérique, comprenant des portions de code de logiciel qui, lorsque ledit programme est exécuté par un ordinateur, conduisent celui-ci à mettre en œuvre toutes les étapes du procédé selon le premier aspect plus haut. Plus particulièrement, le produit programme d'ordinateur comprend une ou plusieurs séquences d'instructions stockées sur un support de mémoire lisible par une machine comprenant un processeur, lesdites séquences d'instructions étant adaptées pour réaliser toutes les étapes du procédé selon le premier aspect de l'invention lorsque le programme est lu dans le support de mémoire et exécuté par le processeur.

Un cinquième aspect l'invention concerne enfin un support d'enregistrement de données lisible par une machine comprenant un processeur (i.e., un ordinateur), comprenant le programme selon le quatrième aspect. Un tel support d'enregistrement peut être un support d'enregistrement optique tel qu'un CDrom ou un DVDrom, un support d'enregistrement magnétique tel qu'un disque dur d'ordinateur, une mémoire électronique lisible électriquement telle qu'une EPROM une EEPROM, une mémoire DRAM, une mémoire Flash, etc.

### Brève Description des Dessins

D'autres caractéristiques et avantages de l'invention apparaîtront encore à la lecture de la description qui va suivre. Celle-ci est purement illustrative et doit être lue en regard des dessins annexés sur lesquels :
- la Figure 1 est un schéma fonctionnel montrant un exemple de passerelle résidentielle mettant en œuvre de l'agrégation de deux liens pour la communication entre un réseau domestique et Internet, par exemple ;
- les Figures 2A-2C illustrent les différents chemins que peuvent suivre les données issues de deux passerelles résidentielles comme celle de la Figure 1 pour atteindre l'Internet, respectivement lorsqu'aucune des deux passerelles, lorsqu'une seule des deux passerelles ou lorsque les deux passerelles mettent en œuvre l'agrégation de liens ;

- les Figures 3A-3D sont des schémas illustrant différentes configurations susceptibles de donner lieu à des croisements de flux entre deux passerelles résidentielles, ou plus, comme la passerelle résidentielle de la Figure 1 ;
- la Figure 4 est un schéma simplifié d'un autre exemple de passerelle résidentielle avec plus de deux liens éligibles à l'agrégation de liens ; et,
- La Figure 5 est un diagramme d'état et un diagramme d'étapes qui illustre des modes de mise en œuvre du procédé selon l'invention ; et,
- les Figures 6A-6C sont des schémas illustrant différents cas d'utilisation du procédé, en comparant à chaque fois la situation sans l'implémentation du procédé (à gauche) à la situation avec l'implémentation du procédé (à droite).

### Description détaillée de modes de réalisation

Dans la description de modes de réalisation qui va suivre et dans les Figures des dessins annexés, les mêmes éléments ou des éléments similaires portent les mêmes références numériques aux dessins.

Comme il a été exposé en introduction, différentes technologies utilisent le concept de l'agrégation de liens entre des équipements d'un réseau (par exemple des commutateurs ou routeurs), ou entre un appareil (par exemple un ordinateur) et un réseau, afin notamment d'accroître le débit au-delà des limites qui sont atteintes avec un seul lien. Ces techniques existantes peuvent être mises en œuvre dans chacune des trois couches inférieures du modèle OSI.

Il y a par exemple l'agrégation de liens Ethernet physiques via le « *Channel Bonding* » entre deux routeurs d'un réseau, que la couche réseau du modèle OSI ne voit que comme un seul canal logique de communication. Un autre exemple est donné par le partage de plusieurs liens (par exemple, deux câbles Ethernet) pour la connexion d'un ordinateur avec un serveur de manière transparente. Sur un réseau sans fil, selon un autre exemple, un équipement peut combiner plusieurs plages de fréquence en une seule, plus étendue. Ainsi par exemple, en IEEE 802.11n, il est défini un mode de fonctionnement avec une plage de fréquences s'étendant sur 40 MHz. Ce canal unique utilise deux bandes de 20 MHz (i.e., deux porteuses) adjacentes. Le terme d'agrégation de porteuses est alors aussi utilisé. Un autre exemple, encore, est l'agrégation d'un lien 4G et d'un lien Wi-Fi au sein d'un terminal mobile (téléphone mobile ou tablette, par exemple). Egalement, au sein d'une passerelle résidentielle (box), on connaît l'agrégation d'un lien DSL comme un lien Ethernet et d'un lien radio comme un lien 3G / 4G du terminal mobile de l'abonné à ces deux services.

L'agrégation de deux liens DSL de deux passerelles résidentielles de deux abonnés d'un même fournisseur d'accès à Internet via une connexion Wi-Fi établie entre ces deux équipements lorsqu'ils se trouvent à portée radio l'un de l'autre, peut être regardée comme une extension nouvelle des exemples ci-dessus. Un cas d'usage envisageable est la situation dans laquelle deux telles boxes respectivement installées dans deux bâtiments voisins, par exemple deux maisons d'habitation, et ayant chacun un lien Ethernet permettant de se connecter à des serveurs du réseau Internet, sont à portée radio l'une de l'autre si bien qu'elles peuvent communiquer via le Wi-Fi. Le lien Ethernet de l'un des abonnés peut alors être agrégé avec celui de son voisin, via la connexion Wi-Fi entre les deux boxes.

Toutefois, dans un tel contexte, éventuellement élargi à plus de deux passerelles résidentielles à portée les unes des autres, il a été identifié un risque de création de croisements de liens si aucune précaution n'est prise, ainsi qu'il a été exposé en introduction de la présente description. Des modes de réalisation de l'invention apportent une solution pour éliminer ou du moins réduire ce risque de manière significative.

A titre d'exemple non limitatif, la présente description sera donnée ci-après en référence à un équipement de réseau qui est une passerelle résidentielle *(i.e.,* une box). Les passerelles résidentielles jouent aujourd'hui un rôle important en reliant les réseaux domestiques à Internet. Les boxes considérées ici possèdent, chacune, une interface pour la connexion au réseau domestique de l'utilisateur correspondant, à savoir un réseau local (LAN). Elles possèdent aussi chacune une ou plusieurs autres interfaces, dont au moins une interface pour la communication avec une autre box similaire, et au moins une autre interface pour communiquer avec l'Internet ou tout autre réseau étendu (WAN).

Chaque interface de la box est bidirectionnelle : elle présente un lien d'entrée et un lien de sortie. Les termes « entrée » et « sortie » sont ici utilisés en référence à l'échange de données du point de vue de la box. Dans le sens montant des données (pour le transfert de données du LAN vers le WAN), le lien d'entrée de l'interface LAN et le lien de sortie de l'interface WAN sont utilisés. Pour un transfert de données dans le sens descendant (du WAN vers le LAN), c'est l'inverse : le lien d'entrée de l'interface WAN et le lien de sortie de l'interface LAN sont utilisés.

L'interface qui permet à une box de communiquer avec une autre box similaire peut comporter des liens en provenance de, ou vers un réseau public, par exemple un lien vers un réseau sans fil communautaire.

Des exemples de réseaux sans fil sont, notamment :
- les réseaux de téléphonie mobile, publics ou professionnels, comme le réseau public GSM 3G / 4G (LTE) ;
- des réseaux locaux sans fils (WLAN, de l'anglais « Wireless Local Area Network ») comme le Wi-Fi (802.11) ou hiperLAN 2 (« *Hlgh Performance Radio LAN 2.0* ») ; ou encore,
- des réseaux personnels sans fil appelés également réseaux individuels sans fils ou réseau domotique sans fils et notés WPAN (pour « *Wireless Personal Area Network* »), d'une faible portée de l'ordre de quelques dizaines mètres, comme ZigBee (aussi connu sous le nom IEEE 802.15.4) ou Bluetooth (aussi connu sous le nom IEEE 802.15.1) ;
- etc.

Mais il peut aussi s'agir d'un lien physique (filaire par exemple) librement accessible par des équipements tiers, comme un lien PCL (« Courants Porteurs en Ligne ») sur le réseau d'alimentation électrique d'une habitation, d'un immeuble voire d'un quartier, ou autre (voir par exemple IEEE 1901).

Egalement, le lien entre les deux boxes n'est pas forcément un lien ouvert au public au sens large. Il peut s'agit d'un lien Wi-Fi établi entre deux abonnés qui décident de partager leurs ressources pour l'accès à un réseau comme Internet, par exemple deux voisins habitants dans une même rue ou dans le même quartier d'une ville ou d'un village, et qui s'échangent des codes d'accès à cet effet. Egalement, le lien entre les deux équipements de réseau, par le Wi-Fi ou autre, peut être défini par défaut entre deux passerelles résidentielles fournies par un même fournisseur d'accès à Internet (FAI), qui y voit là la possibilité d'étendre la qualité de service (QoS) de manière transparente pour chaque abonné.

Il est bien entendu que l'invention peut s'appliquer à tout type d'équipement avec différentes combinaisons d'interfaces en nombre égal ou supérieur à deux, qui sont susceptibles d'être agrégées pour augmenter le débit des communications. Cette pluralité d'interface peut comprendre des interfaces Ethernet, CPL, Wi-Fi, 3G / 4G, etc., du moment qu'elles offrent des liens respectifs vers Internet susceptibles d'être agrégés via un lien entre deux équipements, pour augmenter le débit de chaque équipement (ou de l'un au moins de tels équipements) lors de la connexion à l'Internet ou à un autre réseau étendu (WAN), par exemple.

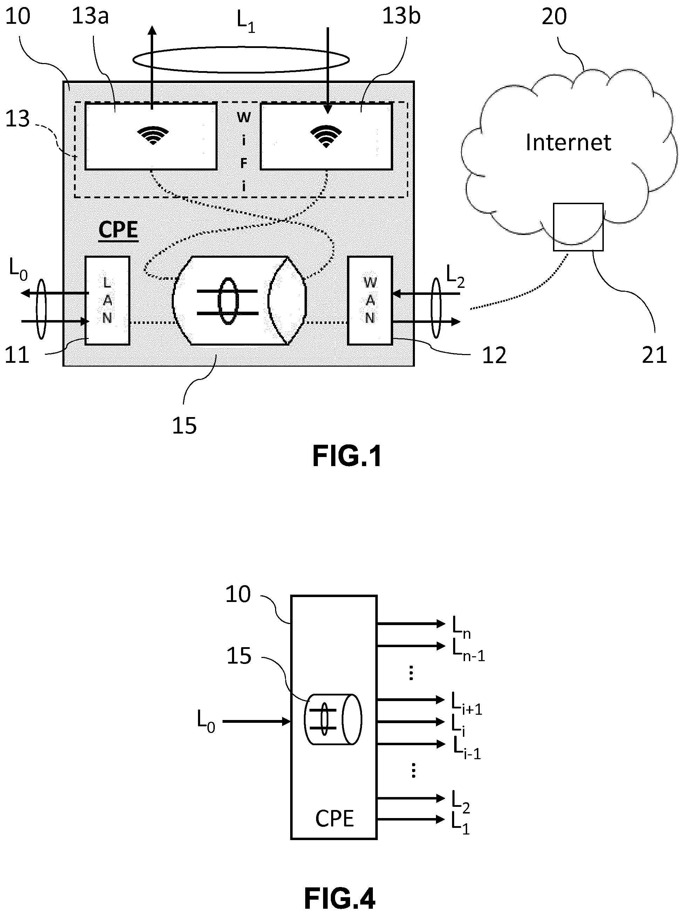

En référence au schéma de la **Figure 1****,** un exemple de telle passerelle résidentielle 10 (CPE) peut comprendre une première interface Ethernet 11 pour communiquer avec un réseau local (LAN) non représenté, une seconde interface Ethernet 12 pour communiquer avec un réseau étendu (WAN) tel que l'Internet 20, et une interface Wi-Fi 13 pour communiquer sans fil avec d'autres équipements similaires. Dans des modes de mise en œuvre, ces autres équipements supportant le Wi-Fi sont capables de se connecter à la passerelle 10 lorsqu'ils sont à portée radio.

La passerelle 10 met en œuvre l'agrégation de liens pour communiquer avec un hôte dans le réseau 20, via un point d'agrégation 21 quelque part dans ledit réseau. Plus particulièrement, l'agrégation de liens est ici mise en œuvre entre les liens Ethernet 12 respectifs de deux équipements identiques ou similaires en utilisant le lien Wi-Fi entre ces deux équipements. Plus particulièrement, la box 10 comprend un moteur d'agrégation 15 recevant les On notera que le point d'agrégation n'est pas systématiquement le même pour l'ensemble des équipements sont susceptibles de participer à la formation de boucles.

Dans le contexte de la mise en œuvre du procédé de routage de données selon des modes de mise en œuvre de l'invention, une passerelle telle que la passerelle 10 montrée à la Figure 1 peut ainsi communiquer avec un hôte dans le réseau 10 directement via l'interface Ethernet 12, mais aussi indirectement via une interface Ethernet d'un autre équipement réseau identique ou similaire avec lequel elle communique en Wi-Fi.

L'apparition de technologies telle que le Wi-Fi offre en effet aux internautes la possibilité de transformer leur point d'accès privé en hotspot publique, ou du moins partagé. En effet, chaque internaute peut offrir à d'autres internautes la possibilité d'utiliser tout ou partie de sa bande passante pour communiquer avec l'Internet via son réseau Wi-Fi. La passerelle résidentielle d'un particulier peut ainsi devenir un hotspot Wi-Fi ouvert à tous les utilisateurs présents dans la zone de couverture radio. Cette possibilité est actuellement encouragée par certains fournisseurs d'accès à Internet (FAI) au sein de la communauté de leurs clients/abonnés. Ils y voient le moyen d'augmenter la bande passante disponible pour chacun de leurs abonnés en mutualisant les points d'accès de plusieurs d'entre eux. Les passerelles résidentielles requièrent des capacités qui gonflent inexorablement avec l'augmentation du trafic de données multimédias, la multiplication des applications cloud et la montée en débit des accès (parfois au-delà de 100 Mbit/s). Cette complexité accrue se traduit par une plus grande occurrence de problèmes techniques, qui génère une augmentation des coûts pour les fournisseurs de services, en particulier avec les interventions à domicile.

Dans ce contexte, l'invention propose une solution au problème consistant dans le risque de formation de croisements de liens entre deux équipements de réseau (CPE) qui tous les deux mettent en œuvre de l'agrégation de liens, avec au minimum deux liens :
- un lien de sortie vers l'autre équipement de réseau comme le lien de sortie L₁ de l'interface 13 (interface Wi-Fi) de l'équipement 10 de la Figure 1 ; et
- au moins un autre lien de sortie comme le lien de sortie L₂ de l'interface 12 (interface WAN) de l'équipement 10 de la Figure 1, qui est capable d'atteindre un point d'agrégation comme le point d'agrégation 21 de la Figure 1, dans le réseau 20.

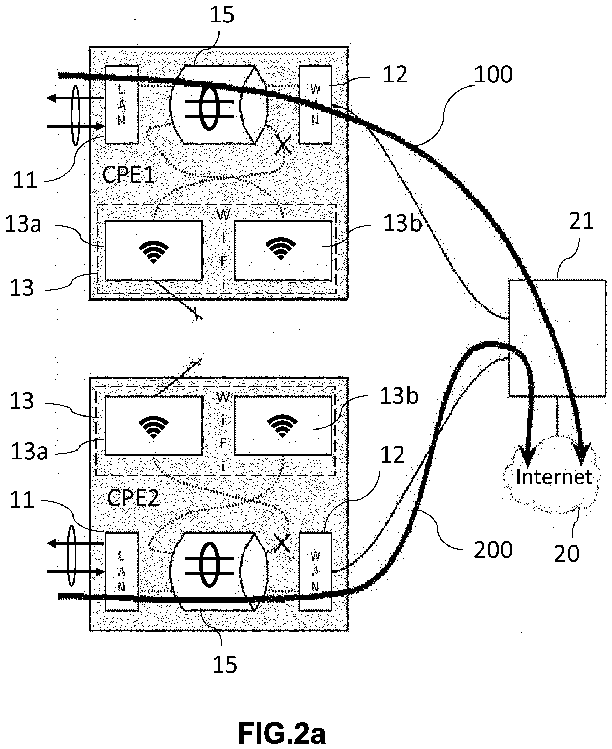

Les Figures **2A-2C** illustrent les différents chemins que peuvent suivre les données entre une première passerelle résidentielle CPE1 et une seconde passerelle résidentielle CPE2 comme celle de la Figure 1 mettant toutes les deux en œuvre l'agrégation de liens, lorsque chacune possède un lien de sortie direct vers Internet un autre lien de sortie pour atteindre Internet via l'autre passerelle. Par exemple cela peut être le fait d'être client au Wi-Fi public d'une passerelle résidentielle située dans le voisinage.

C'est ce dernier lien qui peut être à l'origine d'un croisement de flux de données entre les passerelles CPE1 et CPE2, ainsi qu'il va maintenant être présenté. En effet, si un lien de sortie d'un équipement mettant en œuvre l'agrégation de liens a pour destination un équipement qui peut lui aussi faire de l'agrégation de liens avec un lien direct vers Internet et un autre lien qui n'atteint Internet qu'indirectement à travers l'équipement source, alors ce lien de sortie peut être à l'origine de la création d'un croisement de flux.

Sur les Figures 2A-2C, le chemin parcouru par le flux des données 100 de la passerelle CPE1 pour atteindre le point d'agrégation dans Internet ainsi que le chemin parcouru par le flux des données 200 de la passerelle CPE1 pour atteindre le même ou un autre point d'agrégation dans Internet, sont tous les deux représentés par un trait épais.

En référence au schéma de la **Figure 2A****,** le moteur d'agrégation de la passerelle CPE1 peut prendre la décision de n'utiliser que le lien de sortie L₂, i.e. le lien de sortie de l'interface Ethernet WAN pour atteindre directement le point d'agrégation 21 dans l'Internet 20. La même décision peut être prise par le moteur d'agrégation de l'autre passerelle CPE2, pour ce qui concerne le routage de ses données vers Internet. Dans un tel cas, il n'y a pas de croisement de flux entre les boxes CPE1 et CPE2. Les deux boxes exploitent chacune leur propre accès WAN. On notera que cette situation est identique à celle qui existe si les deux boxes CPE1 et CPE2 ne sont plus connectées l'une à l'autre par leur interface Wi-Fi, pour quelque raison que ce soit.

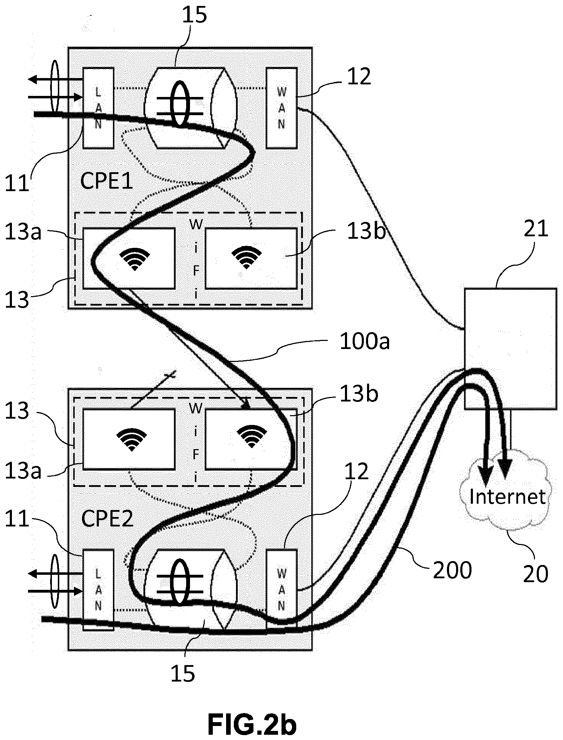

Dans le cas de la **Figure 2B****,** le moteur d'agrégation de la passerelle CPE1 prend la décision d'utiliser non seulement le lien de sortie L₂, *i.e.* le lien de sortie de l'interface Ethernet WAN, mais aussi le lien de sortie L₁, *i.e.* le lien qui lui permet d'atteindre directement le point d'agrégation 21 dans l'Internet 20, à savoir via le lien Ethernet de l'autre passerelle CPE2. Dit autrement, les liens de sortie L₁ et L₂ de la passerelle CPE1 sont agrégés. On notera que seul le sous-flux 100a des données de la box CPE1 qui transite par l'autre box CPE2 est représenté à la Figure 2B, afin de ne pas surcharger la figure au détriment de sa lisibilité. L'autre sous-flux, qui atteint l'Internet 20 directement depuis la box CPE1 via son interface WAN, n'est pas représenté. Dans un tel cas, il n'y a pas non plus de croisement de flux entre les deux boxes CPE1 et CPE2. La box CPE1 utilise une partie de la bande passante du lien L₂ de la box CPE2 dans le cadre de l'agrégation de lien, ce qui permet d'augmenter son débit de communication avec Internet.

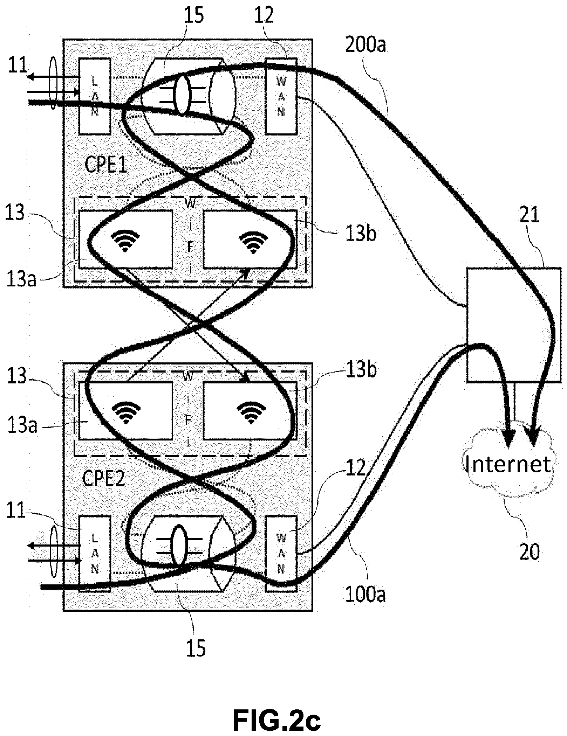

Mais dans le cas représenté à la **Figure 2C****,** par contre, il se forme un croisement de flux. Dans cet exemple en effet, la décision d'agrégation prise par le moteur d'agrégation de la passerelle CPE1 est la même que dans le cas présenté à la Figure 2B et décrit ci-dessus. Néanmoins, le moteur d'agrégation de la passerelle CPE2 prend quant à lui également la décision, cette fois, d'utiliser non seulement le lien de sortie L₂, i.e. le lien de sortie de l'interface Ethernet WAN, mais aussi le lien de sortie L₁, i.e. le lien qui lui permet d'atteindre indirectement le point d'agrégation 21 dans l'Internet 20, à savoir via le lien Ethernet de la passerelle CPE1. Il se forme donc un croisement entre le sous-flux de données 100a qui provient de la box CPE1 et atteint Internet via la box CPE2, d'une part, et entre le sous-flux de données 200a de la box CPE2 qui provient de la box CPE2 et atteint Internet via la box CPE1, d'autre part. On notera que les sous-flux complémentaires provenant de chaque box CPE1 et CPE2 et atteignant directement Internet (*i.e.,* sans passer par l'autre box CPE2 et CPE1, respectivement) ne sont pas représentés pour ne pas surcharger la Figure 2C.

Ce croisement de flux occasionne les inconvénients qui ont été exposés en introduction, et réduit à néant l'intérêt de l'agrégation de lien qui se manifestait, pour la box CPE1 dans le cas par exemple de la Fifure 2B.

Les modes de mise en œuvre proposés permettent d'éviter qu'une telle situation ne se produise, ou du moins d'en limiter substantiellement le risque.

Pour expliciter ces modes de mises en œuvre, on va considérer que la passerelle résidentielle CPE1, au moins, implémente le procédé de l'invention. Les autres passerelles peuvent implémenter ou non le procédé, cela n'affecte en rien l'effet technique et les avantages obtenus en ce qui concerne le trafic de données de la box CPE1. Bien entendu, toutefois, plus de passerelles résidentielles implémentent le procédé, et meilleur est l'efficacité globale du réseau.

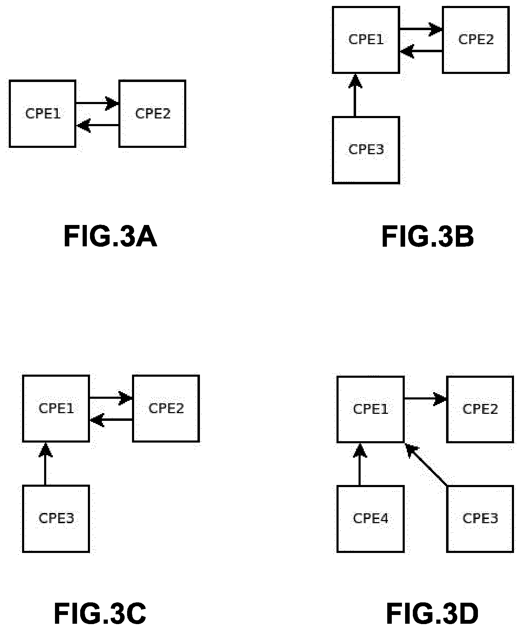

Les **Figures 3A-3D** sont des schémas illustrant différentes configurations susceptibles de donner lieu à des croisements de flux entre deux passerelles résidentielles, ou plus, comme la passerelle résidentielle de la Figure 1.

Un croisement de flux peut se produire lorsque deux équipements CPE1 et CPE2 essayent simultanément de faire de l'agrégation de liens via l'autre équipement, à savoir la box CPE1 via la box CPE2, et la box CPE2 via la box CPE1. Le problème peut également se retrouver lors de configurations plus complexes, avec plus de deux équipements. De manière générale, chaque configuration qui présente un risque de formation d'un croisement de flux implique un premier équipement qui souhaite utiliser l'interface d'un second équipement pour l'agrégation de liens, ainsi qu'un ou plusieurs autres équipements (dont le second équipement fait partie ou non) qui souhaitent faire de l'agrégation de liens via le premier équipement.

Le cas de la **Figure 3A** correspond à ce qui a été décrit ci-dessus en référence aux Figures 2A-2C. Il met en œuvre deux box CPE1 et CPE2. Dans les cas de la **Figures 3B** et de la **Figure 3C****,** une troisième box CPE3 est impliquée. Enfin, l'exemple de configuration de la **Figure 3D** inclut quatre boxes, CPE1, CPE2, CPE3 et CPE4. Il va sans dire que d'autres configurations plus complexes peuvent exister, qui peuvent générer des croisements de flux en fonction des décisions prises par les moteurs d'agrégation respectives de chacune de ces quatre boxes. Egalement lorsque plus de boxes encore peuvent être impliqués.

On notera que les topologies qui posent un problème de croisement(s) de flux de données, ne se limitent pas aux topologies correspondant à la formation de boucles. Par exemple la topologie selon la Figure 3D ne comprend pas de boucle, mais c'est tout de même une topologie à problème. La topologie qui pose problème est une topologie dans laquelle une box qui veut faire de l'agrégation via une autre plateforme résidentielle alors qu'elle est elle-même utilisée par d'autres boxes pour faire de l'agrégation. Ainsi, dans l'exemple de la Figure 3D, la box CPE1 profite de la box CPE2 pour faire de l'agrégation. Cependant les boxes CPE3 et CPE4 profitent elles aussi de la box CPE1 pour faire de l'agrégation, ce qui n'est pas à l'avantage de la box CPE1. En effet, si la box CPE1 a décidé de faire de l'agrégation via CPE2, c'est justement parce qu'elle a besoin d'augmenter sa bande passante en utilisant celle de la box CPE2, en sorte qu'il n'est pas opportun qu'elle partage sa bande passante avec les boxes CPE3 et CPE4.

L'homme du métier appréciera que, si dans les exemples présentés jusqu'ici en référence aux Figures 2A-AC et 3A-3D il y a, pour chaque box CPE1 et CPE2, deux liens de sortie éligibles à l'agrégation, ceci est un minimum. En effet il peut y avoir plus de liens de sortie éligibles à l'agrégation, il n'y a pas de limitation à ce niveau-là. Il peut s'agir d'autres liens susceptibles d'être élus dans le cadre de l'agrégation de liens (plusieurs liens comme les liens L₁ des box CPE1 et CPE2 des Figures 2A-2C) et peuvent donc donner lieu également à des croisements de flux. Mais chaque box peut aussi comprendre des liens qui sont connectés directement à Internet (comme les liens L₂ des box CPE1 et CPE2 des Figures 2A-2C) ou à un autre équipement qui ne fait pas d'agrégation de liens.

La **Figure 4** est ainsi un schéma simplifié d'un autre exemple de passerelle résidentielle 10, avec plus de deux liens de sortie éligibles à l'agrégation de liens. Dans l'exemple représenté, il y a par exemple un nombre n de liens de sortie Li, où i est un indice compris entre 1 et n. Ces liens L₁ à Lₙ permettent de connecter la box 10 à Internet, directement ou indirectement via d'autres boxes ou d'autres équipements. Dans l'exemple représenté, le lien L₀ est le lien d'entrée par lequel la box 10 est connectée au réseau domestique (LAN) de l'abonné.

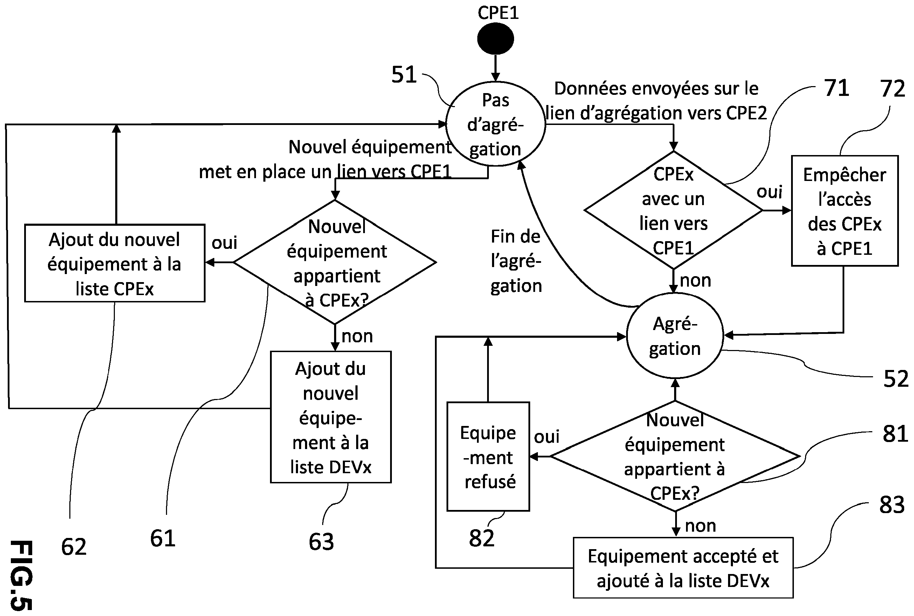

En référence au diagramme de la **Figure 5****,** les étapes du procédé, qui sont mises en œuvre dans le premier équipement réseau CPE1 des Figures 2A-2C, i.e. la première box CPE1 décrite en détail en référence à la Figure 1, vont maintenant être exposées. Il convient au préalable d'introduire le contexte de cette mise en œuvre, et de définir quelques notations qui seront utiles à cet exposé. L'Homme du métier appréciera en outre que le diagramme de la Figure 5 est à la fois un diagramme d'étapes, et un digramme d'états.

On considèrera en effet deux « états » pour la box CPE1, à l'effet de la description qui va suivre. Dans le premier état 51, la box CPE1 n'effectue pas d'agrégation de liens. Ses données sont transmises vers le réseau Internet via le lien de sortie de son interface WAN. Dans le second état 52, à l'inverse, la box CPE1 effectue de l'agrégation de liens pour transmettre ses données vers l'Internet. Dans l'exemple considéré ici, le moteur d'agrégation de la box CPE1 décidera en effet de transmettre une partie du flux de données de CPE1 vers la seconde box CPE2, afin que ce sous-flux atteigne le point d'agrégation dans le réseau via le lien de sortie de l'interface WAN de cette seconde box CPE2. Dit autrement, la box CPE2 est l'équipement auquel CPE1 est connecté, via un lien Wi-Fi dans l'exemple, et qui va recevoir ses données agrégées c'est-à-dire le sous-flux 100b de la Figure 2B.

Par souci de commodité, on désignera par CPEx un ensemble comprenant, le cas échéant, un ou plusieurs équipements de réseau qui sont connectés à la première box CPE1 par un lien de sortie, à savoir toujours un lien de leur interface Wi-Fi dans l'exemple des Figures 1 et 2A-2C, et qui peuvent souhaiter faire de l'agrégation de liens avec ce lien de sortie (on notera qu'il n'existe pas forcément de tels équipements). On observe en outre que la box CPE2 peut faire ou non partie de l'ensemble CPEx. La box CPE1 n'en fait pas partie.

En outre, on désignera par DEVx, un ensemble comprenant un ou plusieurs équipements de réseau qui sont connectés à la première box CPE1 via le même lien que pour les équipements de l'ensemble CPEx, à savoir dans l'exemple le lien de sortie de leur interface Wi-Fi, mais pour qui ce lien est l'accès principal vers le WAN. Les équipements de l'ensemble DEVx ne font pas d'agrégation de liens. Il s'ensuit qu'un équipement ne peut pas faire partie à la fois de DEVx et de CPEx. Tous les équipements connectés à la première box CPE1 qui n'appartiennent pas à CPEx font donc partie de DEVx.

La box CPE1 a la capacité de recenser et d'identifier tous les autres équipements qui lui sont connectés, c'est-à-dire les équipements qui appartiennent à l'union des ensembles CPEx et DEVx. Ceci est permis, par exemple, dans le cas de connexions par Wi-Fi, en utilisant les possibilités offertes par les spécifications de la série des normes IEEE 802.11 ou ISO/CEI 8802-11. Dit autrement, l'Homme du métier sait comment obtenir et entretenir une liste des équipements de l'union des ensembles CPEx et DEVx sans qu'il soit nécessaire de lui fournir plus d'explications ici.

Par conséquent, il suffira d'exposer comment on peut identifier les équipements de réseau appartenant à l'ensemble CPEx des équipements connectés par un lien de sortie à la première box CPE1 et qui font de l'agrégation avec ce lien. Ceci peut être réalisé de différentes manières, au niveau de la box CPE1, selon les implémentations considérées. D'une manière générale, ceci peut être réalisé en détectant si les données reçues par la box CPE1 via les liens de sortie des autres boxes qui lui sont connectées, ont déjà subi ou non une opération d'agrégation de liens en amont de la box CPE1, sur la base de marqueurs présents dans les données reçues.

Le terme « en amont » se réfère ici au parcours des données depuis l'hôte source qui a le premier émis les données, et peut les avoir transmis directement ou indirectement (*i.e.* via d'autres équipements de réseau) à la box CPE1 dans le cadre d'une (ou plusieurs) opération(s) de routage antérieure(s). En effet, la box CPE2 des Figures 2A-2C n'est pas forcément l'hôte à l'origine de la transmission des données, et peut n'être qu'un nœud de transmission entre l'hôte source et l'hôte de destination dans le réseau 20.

Le terme « marqueurs » se réfère quant à lui à de l'information présente dans les données qui marquent le fait, *i.e.* qui indiquent que les données ont subi une agrégation de liens en amont de la box CPE1 dans la chaîne de transmission, soit dans la box CPE2 ou dans une autre box d'où les données arrivent directement, soit encore en amont de la box CPE2. Cette notion générique de marqueurs fait référence à diverses réalités, selon les mises en œuvre concernées.

Notamment, si le protocole MPTCP a été utilisé pour l'agrégation de liens, alors le champ d'option TCP 30 « multipath TCP », réservé à cet effet par l'*Internet Assigned Number Authority* (IANA), est présent dans les données reçues par la box CPE1. L'identification des boxes appartenant à l'ensemble CPEx comprend alors le test de la présence de ce champ d'option dans les données reçues par CPE1.

Si c'est le protocole GRE qui a été utilisé, alors le marqueur dont la présence dans les données reçues doit être testée correspond au code 47 dans le champ « protocol » dans un entête des paquets de données IPv4, ou le champ « next header » du dernier entête des paquets de données IPv6, reçus par CPE1.

Ces techniques ont le défaut de pouvoir générer des faux positifs. C'est pourquoi, si on souhaite s'affranchir de cet inconvénient, le test peut comprendre en variante ou en complément des deux cas ci-dessus, le test d'autres marqueurs dans les données reçues par la box CPE1 qui indiquent que ces données ont subi une agrégation de liens en amont de la box CPE1.

Par exemple, le test peut comprendre en outre une vérification de l'interface par lequel les données sont rentrées dans la box CPE1. Ceci permet de lever des limitations liées au fait que MPTCP ou GRE, respectivement, puisse avoir été utilisé en amont dans la box CPE2 ou une autre box, dans un autre contexte que l'agrégation de liens.

Dans un autre exemple, le test peut comprendre la comparaison de l'adresse IP de destination d'un paquet de données compris dans les données reçues par la box CPE1 avec les adresses IP contenues dans une liste d'adresses IP du point d'agrégation 21 dans le réseau, pour autant bien entendu que ces adresses soient connues de la box CPE1.

Dans une variante le test comprend en outre (c'est-à-dire en plus du test de la présence du champ TCP 30 « multipath TCP » pour MPTCP, ou du test de si le champ « protocol » dans un entête d'un paquet de données IPv4, ou le champ « next header » du dernier entête d'un paquet de données IPv6, compris dans les données reçues par la box CPE1 est égal à 47 pour GRE), d'un identifiant, connu par la box CPE1, d'un autre équipement appartenant à l'ensemble CPEx en amont de cette box CPE1 et par lequel les données ont transité avant d'atteindre la box CPE1. L'identifiant de cette box en amont de la box CPE1 peut comprendre une adresse physique dans le réseau qui lui est propre, par exemple son adresse MAC (mis pour « *Media Access Control* »), et est connue de la box CPE1. Elle peut être connue de la box CPE1 soit de manière statique, soit de manière dynamique parce qu'elle est communiquée à la box CPE1 par un protocole de gestion du réseau comme le protocole TR-069 ou le protocole SNMP (« *Simple Network Management Protocol* »*,* en français «protocole simple de gestion de réseau ») qui est un protocole de communication qui permet aux administrateurs réseau de gérer les équipements du réseau, de superviser et de diagnostiquer des problèmes réseaux et matériels à distance.

Dans une variante, le test peut aussi se baser sur un intervalle d'adresses MAC connues, par exemple sur la base des trois premiers octets des adresses MAC qui désignent le constructeur c'est-à-dire l'identifiant de l'organisation (ou OUI, de l'anglais « *Organizationally Unique Identifier*») géré par l'IEEE pour assurer l'unicité des numéros d'adresse MAC.

Un autre exemple pour l'identification des équipements de l'ensemble CPEx est applicable notamment lorsque le lien entre les équipements appartenant à l'ensemble CPEx qui sont connectés à la box CPE1 et celle-ci est un lien Wi-Fi public. Les protocoles de la série 802.11 opèrent en effet au niveau de la couche 2 du modèle OSI et prévoient la transmission de trois types de trames sans fil :
- des trames de commande (« *Control frames* »), qui aident la délivrance des trames de données ;
- des trames de gestion (« *Management frames* »), qui sont utilisées pour l'établissement et le maintien des communications Wi-Fi ; et,
- des trames de données (« *Data frames* ») qui assurent le transport proprement dit des données utiles.

Or, les clients Wi-Fi envoient des trames de gestion de sous-type probe request pour déterminer quels points d'accès ou AP (de l'anglais *« Access Point* ») sont atteignables. Et les AP répondent aux clients avec des informations sur leur capacités comme le nom du réseau (SSID), les débits supportés, les noms et constructeur de l'AP, etc.

C'est pourquoi dans un mode de mise en œuvre où les données sont reçues par l'équipement CPE1 via l'interface Wi-Fi public, on peut prévoir que l'équipement appartenant à l'ensemble CPEx qui envoie des données agrégées à la box CPE1 ajoute un identifiant unique dans les données. Cet identifiant unique peut être, par exemple, un tag « *vendor specific* » dans les probe requests 802.11, avec une valeur connue à la fois par l'équipement CPE1 et par l'équipement CPE2. Lorsque l'équipement CPE2 reçoit un probe request provenant de CPE1 avec le tag *« vendor specific* » de valeur convenue, il associe le fait de recevoir les données de l'équipement CPE1 (par exemple en se basant sur son adresse MAC) au fait que toutes les données en provenance de cet équipement ont déjà été agrégées.

Un dernier exemple qui sera donné ici s'applique au cas où l'équipement CPE1 joue le rôle de serveur DHCP (« *Dynamic Host Configuration Protocol* ») vis-à-vis des équipements des ensembles CPEx et DEVx qui lui sont connectés, dans le cadre du Wi-Fi public. On rappelle que DHCP, protocole de configuration dynamique des hôtes, est un protocole réseau dont le rôle est d'assurer la configuration automatique des paramètres IP d'une station ou d'une machine, notamment en lui affectant automatiquement une adresse IP et un masque de sous-réseau.

C'est pourquoi, si l'équipement CPE1 joue le rôle de serveur DHCP vis-à-vis des équipements des ensembles CPEx et DEVx dans le cadre du Wi-Fi public, alors les équipements de l'ensemble CPEx qui communiquent des données à la box CPE1 dans le cadre de l'agrégation de liens peuvent indiquer ce fait via une option DHCP (par exemple l'option 60 « vendor class identifier ») avec une valeur prédéfinie et connue de CPE1. Ainsi, la box CPE1 peut associer toutes les données en provenance d'autres équipements au fait que ces données ont déjà été agrégées, c'est-à-dire au fait que les équipements concernés appartiennent à l'ensemble CPEx.

L'homme du métier appréciera que les exemples précités peuvent se combiner, afin de donner une détection plus fiable de si les données ont connu une agrégation de lien antérieure.

Un cas particulier est celui d'un équipement qui ferait pour la première fois de l'agrégation via la box CPE1, et doit donc être ajouté à la liste des équipements de l'ensemble CPEx (en l'identifiant de manière unique avec son adresse MAC par exemple). Tant que l'équipement n'avait pas fait d'agrégation, il appartenait à la liste des équipements de l'ensemble DEVx. Plusieurs techniques (qui ont le défaut de pouvoir générer des faux positifs) peuvent être utilisée pour détecter le fait que l'équipement fait de l'agrégation, comme par exemple les techniques suivantes :
a. Si un équipement envoie du flux MPTCP, à savoir que l'option TCP 30 « multipath TCP » est présente dans un paquet TCP reçu, alors l'équipement fait de l'agrégation, et appartient donc à CPEx.
b. Si un équipement envoie du trafic GRE, à savoir que le champ « protocol » dans un entête d'un paquet de données IPv4, ou le champ « next header » du dernier entête IPv6, est égal à 47, alors l'équipement fait de l'agrégation, et appartient donc à CPEx.
c. Dans le cas où le ou les adresses IPs (v4 ou v6) du point d'agrégation 21 situé dans le réseau WAN et utilisées par les boxes de l'ensemble CPEx sont parfaitement connues de la box CPE1, alors CPE1 peut comparer l'adresse IP (v4 ou v6) de destination du paquet avec celles contenues dans la liste d'adresses IP (v4 ou v6) du point d'agrégation. S'il y a une correspondance, alors l'équipement duquel le paquet est reçu fait de l'agrégation, et donc appartient à l'ensemble CPEx.

On va maintenant décrire l'algorithme implémenté dans la box CPE1 selon des modes de mise en œuvre du procédé de l'invention, pour empêcher les équipements de l'ensemble CPEx d'accéder à la box CPE1 dans le cadre de l'agrégation de liens quand le moteur d'agrégation de cette box CPE1 décide de commencer à faire de l'agrégation dans la box CPE1 elle-même afin de décharger son lien WAN principal et ainsi augmenter son débit vers Internet. On va en particulier considérer ce qui se passe quand la box CPE1 commence à faire de l'agrégation en orientant une partie de son flux de données vers une autre box à laquelle elle est connectée, qui correspond dans l'exemple considéré ici à la seconde box CPE2 des Figures 2A-2C.

Tant que CPE1 ne fait pas d'agrégation avec son lien vers CPE2, rien de particulier ne se passe. La box CPE1 est dans l'état 51 représenté dans le diagramme de la Figure 5.

Le cas peut juste se présenter d'un nouvel équipement qui se connecte à la box CPE1 via son lien Wi-Fi vers CPE1, alors qu'elle ne lui était pas déjà connectée. Ce nouvel équipement entre donc dans l'union des ensembles d'équipements CPEx et DEVx, mais la box CPE1 ne sait pas auquel de ces deux ensembles ce nouvel équipement appartient désormais. Afin de le déterminer, la box CPE1 teste, à l'étape 61, si ce nouvel équipement appartient ou non à l'ensemble CPEx en utilisant l'une des techniques décrites plus haut. Si oui, alors le nouvel équipement est ajouté à la liste des boxes de l'ensemble CPEx, à l'étape 62. Si non, alors il est ajouté à la liste des équipements de l'ensemble DEVx, à l'étape 63. Symboliquement, à la Figure 5, les étapes 62 et 63 rebouclent sur l'état 51 de la box CPE1 pour indiquer que la box CPE1 reste dans cet état.

On considère maintenant ce qui se passe lorsque la première box CPE1 qui implémente le procédé selon l'invention, va entrer dans l'état 52 où elle va faire de l'agrégation avec son lien vers la seconde box CPE2.

Tout d'abord, à l'étape 71 la box CPE1 vérifie s'il existe des équipements qui lui sont connectés et qui appartiennent à l'ensemble CPEx des équipements qui font de l'agrégation de lien vers elle en lui envoyant une partie de leur flux de données. Si non, alors la box CPE1 peut commencer à faire de l'agrégation de flux sans risque d'engendrer de croisement de flux, ce qui, autrement, se produirait si son moteur d'agrégation décidait d'envoyer une partie du flux de la box CPE1 vers la box CPE2. La box CPE1 passe alors dans l'état 52. Si oui, à l'inverse, le risque existe qu'un croisement de flux soit engendré. Pour l'empêcher, et ainsi éviter les inconvénients associés qui ont été mentionnés en introduction de la présente description, des mesures sont prises à l'étape 72 pour empêcher l'accès à la box CPE1 par les boxes de l'ensemble CPEx. Ces mesures seront détaillées plus loin dans cet exposé.

En bref, ce qui est proposé conformément à des modes de mises en œuvre de l'invention, c'est de couper le lien Wi-Fi qui relie les boxes de l'ensemble CPEx à la box CPE1. En effet, la box CPE1 ne maîtrise pas les décisions qui sont prises au niveau des moteurs d'agrégation des boxes de l'ensemble CPEx, mais elle peut prendre la décision radicale de les empêcher de pouvoir lui adresser une partie du flux de ces boxes, en rompant le lien qui les relie à elle.

En d'autres termes, si le test de l'étape 71 est positif, alors la box CPE1 force le fait que les boxes de l'ensemble CPEx n'aient plus accès aux liens vers la box CPE1.

Une fois qu'il n'y a plus aucun équipement appartenant à l'ensemble CPEx qui demeurerait connecté à la box CPE1, cette box CPE1 passe dans l'état 52 où elle fait de l'agrégation de liens avec le lien vers la seconde box CPE2.

En variante, il est possible que la box CPE1 commence à faire de l'agrégation de liens sans attendre le fait que tous les équipements appartenant à l'ensemble CPEx n'aient plus accès à CPE1 via leurs liens d'agrégation. Ceci peut être effectué en tâche de fond. Les inconvénients associés à la formation de croisements de flux ne sont alors que temporaires, et disparaissent progressivement à mesure que les équipements de l'ensemble CPEx sont déconnectés de la box CPE1, pour disparaître totalement quand plus aucun de ces équipements n'est connecté à la box CPE1.

On va maintenant décrire ce qui se passe si, alors que la box CPE1 est dans l'état 52 dans lequel elle fait de l'agrégation de liens (avec la seconde box CPE2, ou avec d'autres équipements), un nouvel équipement met en place un lien vers la box CPE1.

A l'étape 81, il est tout d'abord déterminé par la box CPE1 si ce nouvel équipement appartient à l'ensemble CPEx des équipements qui peuvent faire l'agrégation de liens avec la box CPE1, ou appartiennent à l'ensemble DEVx des équipements qui ne peuvent pas le faire. L'implémentation de cette étape 81 peut à nouveau reposer sur l'un des exemples de techniques qui ont été décrits plus haut.

Si le nouvel équipement appartient à l'ensemble CPEx, alors à l'étape 82 la mise en place du lien de cet équipement vers CPE1 est refusée, ou ce lien est fermé, en fonction des mises en oeuvre. Plus précisément, la connexion est refusée si la classification du nouvel équipement s'effectue avant sa connexion à la box CPE1. Et le lien est fermé si la classification du nouvel équipement s'effectue une fois que celui-ci est connecté à la box CPE1 (ce qui peut être un mal nécessaire dans le cas de l'utilisation de certaines au moins des techniques précitées qui se basent sur l'analyse des données reçues pour détecter si ces données sont reçues dans la cadre de la mise en œuvre d'une agrégation de liens dans l'équipement qui les envoie): le nouvel équipement est alors déconnecté de la box CPE1.

Si, à l'inverse, le test de l'étape 81 a pour résultat que le nouvel équipement appartient à l'ensemble DEVx des équipements qui ne peuvent pas faire de l'agrégation de lien via la box CPE1, alors il n'y a pas de risque d'avoir à supporter les inconvénients d'un croisement de flux. C'est pourquoi, à l'étape 83, la connexion de ce nouvel équipement est alors acceptée ou confirmée, selon les cas. Elle est acceptée si la classification du nouvel équipement s'effectue avant sa connexion à la box CPE1. Et elle est confirmée si la classification du nouvel équipement s'effectue une fois celui-ci connecté à la box CPE1 (plus particulièrement, il n'est pas nécessaire de prendre une action, puisque par hypothèse le nouvel équipement est déjà connecté dans ce cas).

On appréciera que si la box CPE1 arrête de faire de l'agrégation avec une autre box en résultat d'une décision prise par son moteur d'agrégation, alors la machine d'état retourne dans son état initial 51, et les équipements de l'ensemble CPEx seront à nouveau autorisés à se connecter à CPE1 s'ils tentent de s'y reconnecter. En effet, les équipements appartenant à l'ensemble CPEx peuvent mettre en œuvre un processus par lequel ils essayent périodiquement de se reconnecter à la box CPE1 dans l'espoir de voir à nouveau leur connexion autorisée. Bien entendu, rien n'empêche, en outre, que les équipements appartenant à l'ensemble CPEx tentent également de se connecter à un autre équipement que la box CPE1 (qui a le même rôle que CPE1 dans la description qui a été donnée plus haut de modes de mise en œuvre de l'invention) si un tel équipement est disponible.

Ainsi qu'il a été dit plus haut dans le présent exposé en référence à l'étape 72 du procédé, des implémentations du procédé comprennent le fait d'empêcher l'accès à la box CPE1 par les équipements appartenant à l'ensemble CPEx lorsque la box CPE1 veut commencer à faire de l'agrégation de liens *(i.e.,* souhaite passer de l'état 51 à l'état 52) alors que des équipements appartiennent à l'ensemble CPEx des équipement qui font ou peuvent faire de l'agrégation de liens avec la box CPE1, avec le risque de formation de croisements de flux. Ceci peut être réalisé par différentes méthodes.

Par exemple, si un équipement appartenant à l'ensemble CPEx est connecté en Wi-Fi à la box CPE1 en mode station Wi-Fi, la box CPE1 jouant alors le rôle de point d'accès (PA), alors la box CPE1 peut empêcher l'association Wi-Fi (ou bien forcer la désassociation Wi-Fi) avec l'équipement concerné. Il n'apparaît pas nécessaire de décrire ici une implémentation de cet exemple, qui est à la portée de l'Homme du métier.

Selon d'autres exemples applicables quel que soit le lien physique reliant un équipement de l'ensemble CPEx à la box CPE1 (à savoir un lien Wi-Fi ou tout autre lien), empêcher l'accès peut se faire au niveau de la couche 3 du modèle OSI, par exemple avec l'aide de l'outil iptables sous Linux, comme par exemple avec la commande suivante : « iptable -t filter - A FORWARD -m mac -mac-source 00 :11 :22 :33 :44 :55 -j REJECT -reject-with icmp-net-unreachable ». Cette commande empêche l'équipement ayant pour adresse MAC l'adresse 00 :11 :22 :33 :44 :55 d'être routé par la box CPE1. La box CPE1 renvoie à l'équipement CPEx un ICMP de type « network unreachable » en réponse à une tentative de transmission de données. Cet ICMP est important afin d'avertir l'équipement concerné de l'ensemble CPEx que la box CPE1 ne souhaite pas, ou ne souhaite plus transmettre les données de cet équipement. Ici, le filtre sur l'adresse MAC n'est qu'un exemple de critère qui peut être utilisé pour identifier l'équipement appartenant à l'ensemble CPEx. D'autre techniques peuvent être mises en œuvre, comme celles déjà évoquées plus haut.

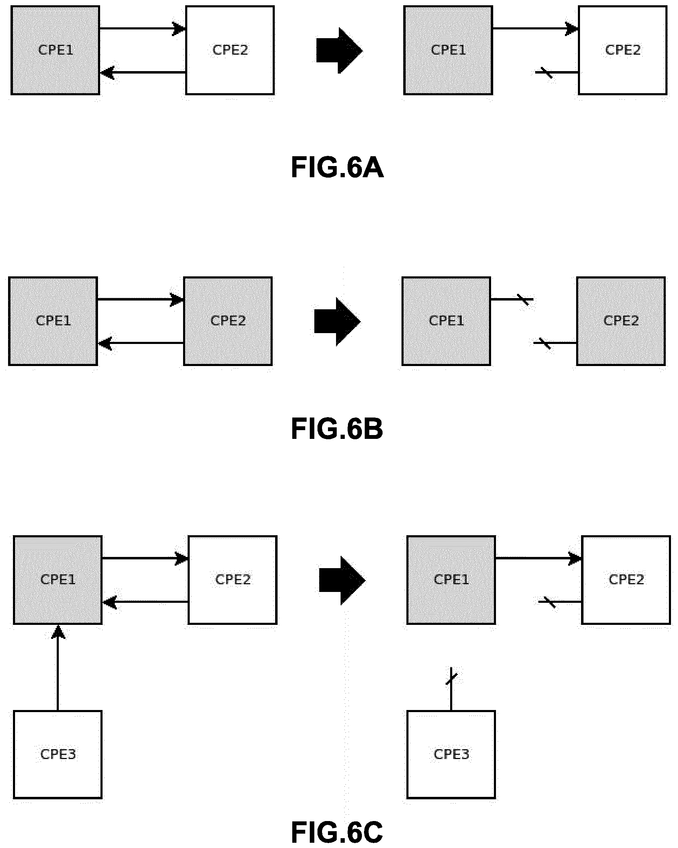

Les schémas de **Figures 6A-6C** illustrent les effets de de la mise en œuvre de l'invention pour différents exemples de configurations. Sur chacune de ces figures, on montre à gauche de la grosse flèche la situation sans la mise en œuvre de l'invention, et à droite de la grosse flèche la situation avec la mise en œuvre des modes de réalisations de l'invention. Par convention, sur ces figures, un équipement qui souhaite faire de l'agrégation de lien avec un autre équipement est représenté par un carré avec remplissage en teinte de gris/motifs, et un équipement qui ne souhaite pas faire de l'agrégation de lien avec un autre équipement est représenté par un carré sans remplissage (i.e., un carré blanc). Les liens établis entre les équipements sont représentés par de simples flèches reliant les carrés correspondants. Les liens vers un équipement qui sont refusés ou fermés en application du procédé selon des mises en œuvre de l'invention, sont représentés par une ligne s'étendant en direction du carré représentant ledit équipement mais interrompue sans atteindre ce carré. Dit autrement, les CPEs grisées font de l'agrégation vers une autre CPE en transmettant des données suivant la flèche, alors que les CPEs non grisées (*i.e.,* blanches), bien que connectées via une flèche à une autre CPE, n'envoient pas de données en application d'un mécanisme d'agrégation à l'instant déterminé.

La **Figure 6A** montre le cas de deux équipements, dont une box CPE1 qui souhaite faire de l'agrégation de lien, et une autre box CPE2 qui ne souhaite pas en faire. La **Figure 6B** montre une configuration avec deux boxes CPE1 et CPE2 qui souhaitent toutes les deux faire de l'agrégation de liens avec l'autre box. La **Figure 6C** montre une configuration avec trois équipements dont une box CPE1 qui souhaite faire de l'agrégation de liens et deux boxes CPE2 et CPE3 qui ne souhaitent pas en faire.

Comme il apparaît sur ces figures, dès lors qu'un équipement déterminé comme la box CPE1 souhaite faire de l'agrégation de lien avec un ou plusieurs autres équipement boxes comme la box CPE2 (Figures 6A et 6B) ou comme les boxes CPE2 et CPE3 (Figure 6C), le (ou les) lien(s) qui peuvent existant vers ladite box déterminée CPE1 depuis l'autre ou les autres boxes CPE2 ou CPE2 et CPE3 sans la mise en œuvre de l'invention, sont refusés ou fermés avec la mise en œuvre de l'invention dans la box CPE1. Dans le cas de la Figure 6B, chacune des boxes CPE1 et CPE2 veut faire de l'agrégation de liens avec l'autre box, donc si chacune met en œuvre l'invention alors les deux liens de l'une vers l'autre et *vice versa* qui existent sans la mise en œuvre de l'invention, sont refusés ou fermés avec la mise en œuvre de l'invention dans les boxs CPE1 et CPE2.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en œuvre par la personne du métier à la lecture de la présente description et des dessins annexés.

Dans les revendications, le terme "comprendre" ou "comporter" n'exclut pas d'autres éléments ou d'autres étapes. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

## Revendications

1. Procédé de gestion de la connexion d'un premier équipement de réseau (CPE1) avec au moins un second équipement de réseau (CPE2) d'un réseau de données (20), chacun desdits premier et second équipements de réseau comprenant un moteur d'agrégation de liens (15) mettant en œuvre une technique d'agrégation de liens pour sélectionner l'un parmi au moins un premier et un second liens de sortie (L₁,L₂) participant à l'agrégation de lien dans ledit équipement de réseau avec :
- un lien de sortie (L₁) pour relier ledit équipement de réseau à l'autre équipement de réseau; et
- au moins un autre lien de sortie (L₂) qui est capable d'atteindre un point d'agrégation (21) déterminé dans le réseau de données (20) sans passer par l'autre équipement de réseau,
le procédé comprenant les étapes suivantes, mises en œuvre dans le premier équipement de réseau (CPE1) :
i. décision par le moteur d'agrégation du premier équipement de réseau d'envoyer des données sur le lien de sortie (L₁) dudit premier équipement de réseau qui le relie au second équipement de réseau (CPE2) ;
ii. détection (71) de si des données du second équipement (CPE2) et/ou d'un autre équipement de réseau (CPEx) sont reçues, via le lien de sortie (L₁) dudit second équipement de réseau et/ou de l'autre équipement de réseau (CPEx), respectivement, qui le relie au premier équipement de réseau, dans le cadre d'une agrégation de liens mise en œuvre dans ledit second équipement de réseau et/ou de l'autre équipement de réseau (CPEx), respectivement, sur la base de marqueurs présents dans lesdites données ; puis,
iii. dans l'affirmative, fermeture (72) du lien de sortie (L1) du second équipement de réseau et/ou de l'autre équipement de réseau (CPEx) qui le relie au premier équipement de réseau ; et,
iv. transmission (55) des données sur le lien de sortie (L₁) reliant le premier équipement de réseau au second équipement de réseau (CPE2) dans le cadre de l'agrégation de liens mise en œuvre dans le premier équipement de réseau (CPE1).

2. Procédé selon la revendication 1 comprenant en outre la détermination (61,81) par le premier équipement de réseau (CPE1), lorsque tout nouvel équipement de réseau tente de se connecter audit premier équipement de réseau, de si des données peuvent être reçues dudit nouvel équipement de réseau en application d'une agrégation de lien mise en œuvre dans ledit nouvel équipement de réseau, sur la base d'un ou plusieurs marqueurs dans des données reçues dudit nouvel équipement de réseau dans le cadre de la procédure d'établissement de la connexion dudit nouvel équipement de réseau au premier équipement de réseau, ou sur la base d'un ou plusieurs marqueurs dans des données reçues dudit nouvel équipement de réseau une fois ladite connexion établie.

3. Procédé selon la revendication 2 dans lequel, si le nouvel équipement de réseau tente de se connecter au premier équipement de réseau (CPE1) alors que (52) ledit premier équipement de réseau met en œuvre de l'agrégation de liens, et s'il est déterminé (81) que des données peuvent être reçues dudit nouvel équipement en application d'une agrégation de lien mise en œuvre dans ledit nouvel équipement de réseau, alors (82) la connexion du nouvel équipement de réseau au premier équipement de réseau est refusée ou elle est fermée dans le cas où ladite connexion est déjà établie au moment où cette détermination intervient.

4. Procédé selon l'une quelconque des revendications 1 à 3, dans lequel, le second équipement de réseau (CPE2) et/ou l'autre équipement de réseau (CPEx) et/ou le nouvel équipement réseau utilisant le protocole MPTCP pour l'agrégation de liens, un marqueur utilisé est la présence de l'option TCP 30 *« multipath TCP* » dans les données reçues par le premier équipement de réseau (CPE1), du second équipement de réseau (CPE2) ou de l'autre équipement de réseau ou du nouvel équipement de réseau, respectivement.

5. Procédé selon l'une quelconque des revendications 1 à 3, dans lequel, le second équipement de réseau (CPE2) et/ou l'autre équipement de réseau (CPEx) et/ou le nouvel équipement réseau utilisant des tunnels GRE pour l'agrégation de liens, un marqueur utilisé est la valeur 47 dans le champ « protocol » dans l'entête IP d'un paquet de données IPv4, ou le champ « next header » dans le dernier entête d'un paquet de données IPv6, compris dans les données reçues par le premier équipement de réseau (CPE1), en provenance du second équipement de réseau (CPE2) ou de l'autre équipement de réseau (CPEx) ou du nouvel équipement de réseau, respectivement.

6. Procédé selon l'une quelconque des revendications 4 ou 5, dans lequel on teste la nature de l'interface par laquelle sont reçues, par le premier équipement de réseau, les données reçues du second équipement réseau (CPE2) et/ou l'autre équipement de réseau (CPEx) et/ou du nouvel équipement de réseau, pour lever des limitations liées au fait que MPTCP ou GRE, respectivement, puisse avoir été utilisé dans le second équipement de réseau (CPE1) ou dans l'autre équipement de réseau (CPEx) ou dans le nouvel équipement de réseau dans un autre contexte que l'agrégation de liens.

7. Procédé selon l'une quelconque des revendications précédentes, dans lequel un marqueur utilisé comprend l'adresse IP de destination d'un paquet de données compris dans les données reçues du second équipement de réseau (CPE2) ou de l'autre équipement de réseau (CPEx) ou du nouvel équipement de réseau avec des adresses IP contenues dans une liste d'adresses IP respectives d'une pluralité de points d'agrégation du réseau de données et qui sont connues du premier équipement de réseau (CPE1).

8. Procédé selon l'une quelconque des revendications précédentes, dans lequel un marqueur utilisé comprend un identifiant unique, connu par le premier équipement de réseau (CPE1), du second équipement de réseau (CPE2) et/ou de l'autre équipement de réseau (CPEx) et/ou du nouvel équipement de réseau.

9. Procédé selon la revendication 8 dans lequel l'identifiant unique du second équipement de réseau (CPE2) ou de l'autre équipement de réseau (CPEx) ou du nouvel équipement de réseau comprend une adresse physique dans le réseau qui est propre audit second équipement de réseau (CPE2) ou à l'autre équipement de réseau (CPEx) ou au nouvel équipement de réseau, respectivement, et est connue du premier équipement de réseau (CPE1) soit de manière statique soit parce qu'elle est communiquée audit premier équipement de réseau par un protocole de gestion du réseau, et dans lequel le test de l'identifiant comprend la comparaison avec un intervalle d'adresses physiques connues du premier équipement de réseau (CPE1).

10. Procédé selon l'une quelconque des revendications précédentes, dans lequel, les données étant reçues du second équipement de réseau (CPE2) ou de l'autre équipement de réseau (CPEx) ou du nouvel équipement de réseau via une interface Wi-Fi IEEE 802.11 du premier équipement de réseau, un marqueur utilisé comprend une valeur spécifique dans l'attribut numéro 26 d'une trame de type probe request.

11. Procédé selon l'une quelconque des revendications précédentes, dans lequel, le premier équipement de réseau (CPE1) jouant le rôle de serveur DHCP vis-à-vis du second équipement de réseau (CPE2) et/ou vis-à-vis de l'autre équipement de réseau (CPEx) et/ou vis-à-vis du nouvel équipement de réseau, un marqueur utilisé est une option DHCP avec une valeur prédéfinie connue du premier équipement de réseau, du second équipement de réseau et/ou de l'autre équipement de réseau (CPEx) et/ou du nouvel équipement de réseau, qui est insérée par le second équipement de réseau (CPE2) ou par l'autre équipement de réseau (CPEx) ou par le nouvel équipement de réseau, respectivement, dans les données reçues par le premier équipement de réseau dudit second équipement de réseau ou dudit nouvel équipement de réseau, respectivement, lorsque ces données font l'objet d'une agrégation de liens dans ledit second équipement de réseau ou dans ledit nouvel équipement de réseau, respectivement.

12. Dispositif de gestion de la connexion d'un premier équipement de réseau (CPE1) avec au moins un second équipement de réseau (CPE2), chacun desdits premier et second équipements de réseau comprenant un moteur d'agrégation de liens (15) mettant en œuvre une technique d'agrégation de liens pour sélectionner l'un parmi au moins un premier et un second liens de sortie (L1,L2) participant à l'agrégation de lien dans ledit équipement de réseau avec :
- un lien de sortie (L1) pour relier ledit équipement de réseau à l'autre équipement de réseau; et
- au moins un autre lien de sortie (L2) qui est capable d'atteindre un point d'agrégation (21) dans le réseau (20) sans passer par l'autre équipement de réseau,
le dispositif comprenant, au sein du premier équipement de réseau :
i. des moyens dans le moteur d'agrégation pour décider d'envoyer des données sur le lien de sortie (L₁) dudit premier équipement de réseau qui le relie au second équipement de réseau (CPE2) ;
ii. des moyens pour détecter (71) si des données du second équipement (CPE2) sont reçues, via le lien de sortie (L₁) dudit second équipement de réseau (CPE2) et/ou d'un autre équipement de réseau (CPEx) qui le relie au premier équipement de réseau, dans le cadre d'une agrégation de liens mise en œuvre dans ledit second équipement de réseau, sur la base de marqueurs présents dans lesdites données ; puis,
iii. des moyens pour, dans l'affirmative, fermer le lien de sortie (L1) du second équipement de réseau (CPE2) et/ou de l'autre équipement de réseau (CPEx) qui le relie au premier équipement de réseau ; et,
iv. des moyens pour transmettre (55) des données sur le lien de sortie (L₁) reliant le premier équipement de réseau au second équipement de réseau (CPE2) dans le cadre de l'agrégation de liens mise en œuvre dans le premier équipement de réseau (CPE1).

13. Dispositif selon la revendication 12 comprenant en outre des moyens pour mettre en œuvre un procédé selon toutes les étapes de l'une quelconque des revendications 2 à 11.

14. Passerelle résidentielle (CPE1) comprenant un dispositif selon la revendication 12 ou la revendication 13.

15. Produit "programme d'ordinateur" chargeable directement dans la mémoire interne d'un ordinateur numérique, comprenant des portions de code de logiciel qui, lorsque ledit programme est exécuté par un ordinateur, conduisent celui-ci à mettre en œuvre toutes les étapes du procédé selon l'une quelconque des revendications 1 à 11.

16. Support d'enregistrement de données lisible par une machine comprenant un processeur, comprenant le programme d'ordinateur selon la revendication 15.

## Patentansprüche

1. Verwaltungsverfahren des Einloggens einer ersten Netzausrüstung (CPE1) mit wenigstens einer zweiten Netzausrüstung (CPE2) eines Datennetzes (20), wobei jede der genannten ersten und zweiten Netzausrüstungen eine Verbindungs-Aggregationsmaschine (15) umfasst, die eine Verbindungs-Aggregationstechnik zum Auswählen aus wenigstens einer ersten und einer zweiten Ausgangsverbindung (L₁, L₂) umsetzt, die an der Verbindungsaggregation in der genannten Netzausrüstung beteiligt sind mit:
- einer Ausgangsverbindung (L₁) zum Verbinden der genannten Netzausrüstung mit der anderen Netzausrüstung; und
- wenigstens einer anderen Ausgangsverbindung (L₂), die geeignet ist, um einen bestimmten Aggregationspunkt (21) in dem Datennetz (20) zu erreichen, ohne die andere Netzausrüstung zu durchlaufen,
wobei das Verfahren die folgenden Schritte umfasst, die in der ersten Netzausrüstung (CPE1) umgesetzt werden:
i. Entscheidung durch den Aggregationsmotor der ersten Netzausrüstung, Daten auf die Ausgangsverbindung (L₁) der genannten ersten Netzausrüstung zu schicken, die ihn mit der zweiten Netzausrüstung (CPE2) verbindet;
ii. Detektion (71), wenn Daten der zweiten Ausrüstung (CPE2) und/oder einer anderen Netzausrüstung (CPEx), jeweils über die Ausgangsverbindung (L₁) der genannten Netzausrüstung und/oder der anderen Netzausrüstung (CPEx), die sie mit der ersten Netzausrüstung verbindet, jeweils im Rahmen einer Verbindungs-Aggregation, die in dem genannten zweiten Ausrüstungsnetz und/oder dem anderen Ausrüstungsnetz (CPEx) umgesetzt wird, auf der Grundlage von in den genannten Daten enthaltenen Markern empfangen werden; dann
iii. Bejahendenfalls Verschluss (72) der Ausgangsverbindung (L₁) der zweiten Netzausrüstung und/oder der anderen Netzausrüstung (CPEx), die sie mit der ersten Netzausrüstung verbindet; und
iv. Übertragung (55) der Daten auf die Ausgangsverbindung (L₁), die die erste Netzausrüstung mit der zweiten Netzausrüstung (CPE2) im Rahmen der Verbindungs-Aggregation verbindet, die in der ersten Netzausrüstung (CPE1) umgesetzt wird.

2. Verfahren gemäß Anspruch 1, umfassend darüber hinaus die Bestimmung (61, 81) durch die erste Netzausrüstung (CPE1), wenn jede neue Netzausrüstung versucht, sich mit der genannten ersten Netzausrüstung zu verbinden, wenn Daten von der genannten Netzausrüstung in Anwendung einer Verbindungs-Aggregation, die in der genannten Netzausrüstung umgesetzt wird, auf der Grundlage von einem oder mehreren Markern in den Daten, die von der genannten neuen Netzausrüstung im Rahmen des Aufbauverfahrens des Einloggens der genannten neuen Netzausrüstung bei der ersten Netzausrüstung empfangen werden, oder auf der Grundlage von einem oder mehreren Markern in den Daten, die von der genannten neuen Netzausrüstung empfangen werden, nachdem das genannten Einloggen erfolgt ist, empfangen werden können.

3. Verfahren gemäß Anspruch 2, bei dem, wenn die neue Netzausrüstung versucht, sich in die erste Netzausrüstung (CEPE1) einzuloggen, während (52) die genannte erste Netzausrüstung eine Verbindungs-Aggregation umsetzt, und wenn bestimmt wird (81), dass Daten von der neuen Ausrüstung in Anwendung einer Verbindungsaggregation empfangen werden können, die in der genannten neuen Netzausrüstung umgesetzt wird, während (82) das Einloggen der neuen Netzausrüstung in die erste Netzausrüstung abgelehnt wird oder es in dem Fall geschlossen wird, in dem das genannte Einloggen zu dem Zeitpunkt, zu dem diese Bestimmung erfolgt, bereits aufgebaut ist.

4. Verfahren gemäß irgendeinem der Ansprüche 1 bis 3, bei dem die zweite Netzausrüstung (CPE2) und/oder die andere Netzausrüstung (CPEx) und/oder die neue Netzausausrüstung das Protokoll MPTCP für die Verbindungs-Aggregation verwenden, ein verwendeter Marker das Vorhandensein der Option TCP 30 *"multipath TCP"* in den Daten ist, die jeweils von der ersten Netzausrüstung (CEP1), der zweiten Netzausrüstung (CPE2) oder der an deren Netzausrüstung oder der neuen Netzausrüstung empfangen werden.

5. Verfahren gemäß irgendeinem der Ansprüche 1 bis 3, bei dem die zweite Netzausrüstung (CPE2) und/oder die andere Netzausrüstung (CPEx) und/oder die neue Netzausrüstung, die Tunnel GRE für die Verbindungs-aggregation verwenden, ein verwendeter Marker der Wert 47 in dem Feld "protocol" in der genannten Kopfzeile IP eines Datenpakets IPv4 oder das Feld "next header" in der letzten Kopfzeile eines Datenpakets IPv6 ist, umfasst in den Daten, die von der ersten Netzausrüstung (CPE1) empfangen werden, stammend jeweils aus der zweiten Netzausrüstung (CEP2) oder der anderen Netzausrüstung (CPEx) oder der neuen Netzausrüstung.

6. Verfahren gemäß irgendeinem der Ansprüche 4 oder 5, bei dem die Art der Schnittstelle getestet wird, durch die erste Netzausrüstung die Daten empfangen werden, die von der zweiten Netzausrüstung (CPE2) und/oder der anderen Netzausrüstung (CPEx) und/oder der neuen Netzausrüstung empfangen werden, um Begrenzungen aufzuheben, die mit dem Umstand verbunden sind, dass jeweils MPTCP oder GRE in der zweiten Netzausrüstung (CPE1) oder in der anderen Netzausrüstung (CPEx) oder in der neuen Netzausrüstung in einem anderen Kontext als der Verbindungsaggregation verwendet werden kann.

7. Verfahren gemäß irgendeinem der voranstehenden Ansprüche, bei dem ein verwendeter Marker die IP-Zieladresse eines Datenpakets umfasst, das in den Daten umfasst ist, die von der zweiten Netzausrüstung (CPE2) oder der anderen Netzausrüstung (CPEx) oder der neuen Netzausrüstung mit IP-Adressen empfangen werden, die in einer Liste jeweiliger IP-Adressen einer Vielzahl von Aggregationspunkten des Datennetzes enthalten sind und die der ersten Netzausrüstung (CPE1) bekannt sind.

8. Verfahren gemäß irgendeinem der voranstehenden Ansprüche, bei dem ein verwendeter Marker eine einzigartige Kennung umfasst, die der ersten Netzausrüstung (CPE1), der zweiten Netzausrüstung (CPE2) und/oder der anderen Netzausrüstung (CPEx) und/oder der neuen Netzausrüstung bekannt ist.

9. Verfahren gemäß Anspruch 8, bei dem die einzigartige Kennung der zweiten Netzausrüstung (CPE2) oder der anderen Netzausrüstung (CPEx) oder der neuen Netzausrüstung eine physische Adresse in dem Netz umfasst, das jeweils der genannten zweiten Netzausrüstung (CPE2) oder der anderen Netzausrüstung (CPEx) oder der neuen Netzausrüstung zugeordnet ist und der ersten Netzausrüstung (CPE1) entweder statisch bekannt ist oder weil sie der ersten Netzausrüstung durch ein Verwaltungsprotokoll des Netzes kommuniziert wird und bei dem der Test der Kennung den Vergleich mit einem Intervall physischer Adressen umfasst, die der ersten Netzausrüstung (CPE1) bekannt sind.

10. Verfahren gemäß irgendeinem der voranstehenden Ansprüche, bei dem ein verwendeter Marker einen spezifischen Wert in dem Attribut Nummer 26 eines Rasters vom Typ "probe request" umfasst, wenn die Daten von der zweiten Netzausrüstung (CPE2) oder der anderen Netzausrüstung (CPEx) oder der neuen Netzausrüstung über eine Schnittstelle Wi-Fi IEEE 808.11 der ersten Netzausrüstung empfangen werden.

11. Verfahren gemäß irgendeinem der voranstehenden Ansprüche, bei dem, wenn die erste Netzausrüstung (CPE1) die Serverrolle DHCP gegenüber der zweiten Netzausrüstung (CPE2) und/oder gegenüber der anderen Netzausrüstung (CPEx) und/oder gegenüber der neuen Netzausrüstung spielt, ein verwendeter Marker eine Option DHCP mit einem vordefinierten Wert ist, der der ersten Netzausrüstung, der zweiten Netzausrüstung und/oder der anderen Netzausrüstung (CPEx) und/oder der neuen Netzausrüstung bekannt ist, die jeweils von der zweiten Netzausrüstung (CPE2) oder von der anderen Netzausrüstung (CPEx) oder von der neuen Netzausrüstung in die Daten eingeführt wird, die jeweils von der ersten Netzausrüstung, der genannten zweiten Netzausrüstung oder genannten neuen Netzausrüstung empfangen werden, wenn diese Daten Gegenstand einer Verbindungsaggregation jeweils in der genannten zweiten Netzausrüstung oder in der genannten neuen Netzausrüstung sind.

12. Verwaltungsvorrichtung des Einloggens einer ersten Netzausrüstung (CPE1) mit wenigstens einer zweiten Netzausrüstung (CPE2), wobei jede dieser genannten ersten und zweiten Netzausrüstungen eine Verbindungs-Aggregationsmaschine (15) umfasst, die eine Verbindungs-Aggregationstechnik zum Auswählen einer aus wenigstens einer ersten und einer zweiten Ausgangsverbindung (L1, L2) umsetzt, die zur Verbindungs-aggregation in der genannten Netzausrüstung beiträgt, mit:
- einer Ausgangsverbindung (L1) zum Verbinden der genannten Netzausrüstung mit der anderen Netzausrüstung; und
- wenigstens einer anderen Ausgangsverbindung (L2), die geeignet ist, um einen bestimmten Aggregationspunkt (21) in dem Datennetz (20) zu erreichen, ohne die andere Netzausrüstung zu durchlaufen,
wobei die Vorrichtung innerhalb der ersten Netzausrüstung umfasst:
i. Mittel in der Aggregationsmaschine, um zu entscheiden, Daten auf die Ausgangsverbindung (L1) der genannten ersten Netzausrüstung zu senden, die sie mit der zweiten Netzausrüstung (CPE2) verbindet;
ii. Mittel zum Detektieren (71), ob Daten der zweiten Ausrüstung (CPE2) über die Ausgangsverbindung (L¹) der genannten zweiten Netzausrüstung (CPE2) und/oder einer anderen Netzausrüstung (CPEx), die sie mit der ersten Netzausrüstung verbindet, im Rahmen einer Verbindungsaggregation, die in der genannten zweiten Netzausrüstung umgesetzt wird, auf der Grundlage von Markern, die in den genannten Daten vorhanden sind, empfangen werden, dann
iii. Mittel, um bejahendenfalls die Ausgangsverbindung (L1) der zweiten Netzausrüstung (CEP2) und/oder die andere Netzausrüstung (CPEx) zu schließen, die sie mit der ersten Netzausrüstung verbindet; und
iv. Mittel, um Daten auf die Ausgangsverbindung (L₁) zu übertragen (55), die die erste Netzausrüstung mit der zweiten Netzausrüstung (CPE2) im Rahmen der Verbindungsaggregation verbindet, die in der ersten Netzausrüstung (CPE1) umgesetzt wird.

13. Vorrichtung gemäß Anspruch 12, umfassend darüber hinaus Mittel, um ein Verfahren gemäß allen Schritten gemäß irgendeinem der Ansprüche 2 bis 11 umzusetzen.

14. Residente Gateway (CPE1), umfassend eine Vorrichtung gemäß Anspruch 12 oder Anspruch 13.

15. "Computerprogramm"-Produkt, das direkt in den internen Speicher eines digitalen Computers ladbar ist, umfassend Software-Codeabschnitte, die, wenn das Programm durch einen Computer ausgeführt ist, diesen dazu veranlasst, alle Schritte des Verfahrens gemäß irgendeinem der Ansprüche 1 bis 11 umzusetzen.

16. Datenspeicher-Träger, der von einer Maschine lesbar ist, umfassend einen Prozessor, umfassend das Computerprogramm gemäß Anspruch 15.

## Claims

1. Method for managing the connection of a first network device (CPE1) with at least one second network device (CPE2) of a data network (20), each of said first and second network devices comprising a link aggregation engine (15) implementing a link aggregation technique to select one from among at least a first and a second outbound links (L₁, L₂) participating in the link aggregation in said network device with:
- an outbound link (L₁) for connecting said network device to the other network device; and
- at least one other outbound link (L₂) which is capable of reaching a determined aggregation point (21) in the data network (20) without passing through the other network device,
the method comprising the following steps, implemented in the first network device (CPE1):
i. decision by the aggregation engine of the first network device to send data on the outbound link (L₁) of said first network device which connects it to the second network device (CPE2);
ii. detecting (71) whether data from the second device (CPE2) and/or from another network device (CPEx) are received, via the outbound link (L₁) of said second network device and/or the other network device (CPEx), respectively, which connects it to the first network device, in the context of a link aggregation implemented in said second network device and/or the other network device (CPEx), respectively, on the basis of markers present in said data; then,
iii. in the affirmative, closing (72) the outbound link (L₁) of the second network device and/or the other network device (CPEx) which connects it to the first network device; and,
iv. transmission (55) of data on the outbound link (L₁) connecting the first network device to the second network device (CPE2) in the context of the link aggregation implemented in the first network device (CPE1).

2. Method according to claim 1 further comprising the determination (61, 81) by the first network device (CPE1), when any new network device tries to connect to said first network device, of whether data may be received from said new network device in application of a link aggregation implemented in said new network device, on the basis of one or more markers in the data received from said new network device in the context of the procedure for establishing the connection of said new network device to the first network device, or on the basis of one or more markers in the data received from said new network device once said connection has been established.

3. Method according to claim 2 wherein, if the new network device tries to connect to the first network device (CPE1) while (52) said first network device implements link aggregation, and if it is determined (81) that data may be received from said new device in application of a link aggregation implemented in said new network device, then (82) the connection of the new network device to the first network device is denied or it is closed in the case where said connection is already established at the moment where this determination occurs.

4. Method according to any of claims 1 to 3, wherein, the second network device (CPE2) and/or the other network device (CPEx) and/or the new device network using the MPTCP protocol for link aggregation, a marker used in the presence of the option TCP 30 "*multipath TCP*" in the data received by the first network device (CPE1), the second network device (CPE2) or the other network device or the new network device, respectively.

5. Method according to any of claims 1 to 3, wherein, the second network device (CPE2) and/or the other network device (CPEx) and/or the new device network using GRE tunnels for link aggregation, a marker used is the value 47 in the field "protocol" in the IP header of an IPv4 data packet, or the field "next header" in the final header of an IPv6 data packet, comprised in the data received by the first network device (CPE1), originating from the second network device (CPE2) or the other network device (CPEx) or the new network device, respectively.

6. Method according to any of claims 4 or 5, wherein one tests the nature of the interface through which are received, by the first network device, the data received from the second network device (CPE2) and/or the other network device (CPEx) and/or the new network device, for lifting the limitations linked to the fact that MPTCP or GRE, respectively, could have been used in the second network device (CPE1) or in the other network device (CPEx) or in the new network device in a context other than link aggregation.

7. Method according to any of the preceding claims, wherein a marker used comprises the destination IP address of a data packet comprised in the data received from the second network device (CPE2) or the other network device (CPEx) or the new network device with IP addresses contained in a list of respective IP addresses of a plurality of aggregation points of the data network and which are known to the first network device (CPE1).

8. Method according to any of the preceding claims, wherein a marker used comprises a unique identifier, known by the first network device (CPE1), of the second network device (CPE2) and/or the other network device (CPEx) and/or the new network device.

9. Method according to claim 8 wherein the unique identifier of the second network device (CPE2) or the other network device (CPEx) or the new network device comprises a physical address in the network which is specific to said second network device (CPE2) or to the network device (CPEx) or to the new network device, respectively, and is known to the first network device (CPE1) either in a static manner or because it is communicated to said first network device by a network management protocol, and wherein the test of the identifier comprises the comparison with an interval of physical addresses known to the first network device (CPE1).

10. Method according to any of the preceding claims, wherein, the data being received from the second network device (CPE2) or the other network device (CPEx) or the new network device via a Wi-Fi IEEE 802.11 interface of the first network device, a marker used comprises a specific value in the attribute number 26 of a frame of type probe request.

11. Method according to any of the preceding claims, wherein, the first network device (CPE1) playing the role of DHCP server vis-a-vis the second network device (CPE2) and/or vis-a-vis the other network device (CPEx) and/or vis-a-vis the new network device, a marker used is a DHCP option with a predefined value known to the first network device, the second network device and/or the other network device (CPEx) and/or the new network device, which is inserted by the second network device (CPE2) or by the other network device (CPEx) or by the new network device, respectively, in the data received by the first network device from said second network device or said new network device, respectively, when these data are the subject of a link aggregation in said second network device or in said new network device, respectively.

12. Device for managing the connection of a first network device (CPE1) with at least one second network device (CPE2), each of said first and second network devices comprising a link aggregation engine (15) implementing a link aggregation technique to select one from among at least a first and a second outbound links (L₁, L₂) participating in link aggregation in said network device with:
- an outbound link (L₁) for connecting said network device to the other network device; and
- at least one other outbound link (L₂) which is capable of reaching an aggregation point (21) in the network (20) without passing through the other network device,
the device comprising, within the first network device:
i. means in the aggregation engine to decide to send data on the outbound link (L₁) of said first network device which connects it to the second network device (CPE2);
ii. means for detecting (71) whether data from the second device (CPE2) are received, via the outbound link (L₁) of said second network device (CPE2) and/or another network device (CPEx) which connects it to the first network device, in the context of a link aggregation implemented in said second network device, on the basis of markers present in said data; then,
iii. means for, in the affirmative, closing the outbound link (L₁) of the second network device (CPE2) and/or the other network device (CPEx) which connects it to the first network device; and,
iv. means for transmitting (55) data on the outbound link (L₁) connecting the first network device to the second network device (CPE2) in the context of the link aggregation implemented in the first network device (CPE1).

13. Device according to claim 12 further comprising means for implementing a method according to all the steps of any of claims 2 to 11.

14. Residential gateway (CPE1) comprising a device according to claim 12 or claim 13.

15. "Computer programme" product directly loadable in the internal memory of a digital computer, comprising software code portions which, when said programme is executed by a computer, lead said computer to implement all the steps of the method according to any of claims 1 to 11.

16. Data recording support readable by a machine comprising a processor, comprising the computer programme according to claim 15.
